# EUROPEAN PATENT SPECIFICATION

(11) **EP 0 879 857 B1**
(45) Date of publication and mention of the grant of the patent: **01.09.2004**
(21) Application number: 98109381.8
(22) Date of filing: 22.05.1998
(51) Int. Cl.: C09D 11/00, B41J 2/01

(54) **Ink set, and recording method and recording instrument using the same**
Tintensortiment, Aufzeichnungsverfahren und Aufzeichnungsgerät unter Verwendung desselben
Assortiment d'encres, procédé et appareil d'enregistrement en faisant usage

(30) Priority: 22.05.1997 JP 14708197; 24.04.1998 JP 12966698
(43) Date of publication of application: 25.11.1998
(73) Proprietor: CANON KABUSHIKI KAISHA, Tokyo (JP)
(72) Inventor: Takizawa, Yoshihisa, Ohta-ku, Tokyo (JP); Teraoka, Hisashi, Ohta-ku, Tokyo (JP); Osumi, Koichi, Ohta-ku, Tokyo (JP); Takada, Yoichi, Ohta-ku, Tokyo (JP)
(74) Representative: Weser, Wolfgang, Dr. Dipl.-Phys.

(56) References cited:
- EP-A- 0 633 142
- EP-A- 0 675 178
- EP-A- 0 692 527
- US-A- 5 198 023

## Description

### BACKGROUND OF THE INVENTION

### Field of the Invention

The present invention relates to ink sets for ink-jet recording, which are used in recording black images on a recording medium by using in combination plural inks different in polarity as black inks, and an ink-jet recording method and ink-jet recording instruments using such an ink set, and more particularly to ink sets for ink-jet recording, which permit the provision of clear and high-quality images having a sufficient optical density and of prints having excellent water fastness and light fastness, irrespective of the kind of plain paper, and an ink-jet recording method and ink-jet recording instruments using such an ink set.

The present invention also relates to ink sets for ink-jet recording in which a color image is printed with at least two inks of different colors by ejecting ink droplets on a recording medium, and an ink-jet recording method and ink-jet recording instruments using such an ink set, and more particularly to ink sets, which can prevent bleeding at boundaries between a black ink and color inks (hereinafter referred to "bleeding" simply) and white uneven image disorder (hereinafter referred to "white haze") occurred in a black image region at a boundary area between a black ink and a color ink even when plain paper is used, and hence permits the provision of clear color images, and an ink-jet recording method and ink-jet recording instruments using such an ink set.

### Related Background Art

With the spread of ink-jet recording systems, it is advanced to improve the quality and fastness properties of prints. With respect to, for example, water fastness, Japanese Patent Application Laid-Open No. 4-226175 and U.S. Patent No. 5,053,495 disclose novel black dyes and inks which can provide images having good water fastness.

Black inks using a pigment have been reported to form black images excellent in print quality and fastness properties such as water fastness and light fastness on plain paper.

For example, Japanese Patent Application Laid-Open No. 5-179183 discloses pigment inks stabilized with a block polymer of an AB or BAB type, in which A is a hydrophobic homopolymer or copolymer of an acrylic monomer, and B is a hydrophilic polymer or a salt thereof. Japanese Patent Application Laid-Open No. 6-136311 discloses pigment inks which comprise a block polymer of a hydrophobic polymer having a basic amine functional group and a hydrophilic polymer having a nonionic acidic functional group, can provide prints of excellent quality and have excellent dispersion stability. Japanese Patent Application Laid-Open No. 7-53841 has proposed pigment inks for ink-jet, which comprise a triblock polymer of an ABC type, in which A is a hydrophilic homopolymer, B is a polymer bonded to solid particles, and C is a hydrophilic or hydrophobic polymer different from the block A, have excellent dispersion stability and can provide prints of excellent quality.

On the other hand, with the spread of ink-jet recording systems, it is attempted to improve the quality of color images formed on plain paper.

In order to improve the quality of color images, in particular, it is required that black characters recorded on plain paper have such good quality as they are high in density, sharp and free of any feathering. It has also been reported to reduce bleeding phenomenon caused by contact of plural recording inks of different colors with each other at boundary parts of different colors and white haze occurred in a black image region at a boundary area between a color ink and a black ink. White haze means a phenomenon that an image is disordered white unevenly.

For example, Japanese Patent Application Laid-Open No. 8-193176 discloses inks comprising a penetrating agent and 0.02 to 0.5 % by weight of an alginate. Japanese Patent Application Laid-Open No. 6-57192 has proposed black inks containing an anionic dye and yellow inks containing a cationic dye and a polyvalent precipitant. Japanese Patent Application Laid-Open No. 9-118850 has proposed inks in which a first ink is composed of a pigment dispersion, and a second ink comprises an organic acid salt or mineral acid salt. Japanese Patent Application Laid-Open No. 7-314888 has proposed inks comprising a specific fluorine compound.

The methods described in Japanese Patent Application Laid-Open No. 4-226175 and U.S. Patent No. 5,053,495 feature that one or more carboxylic acids, which are weak acids, are introduced into a dye molecule, thereby developing the water fastness of the resulting print making good use of the dependence of solubility of the dye on pH. However, the water fastness is insufficient, in particular, when using neutralized paper because the surface pH of paper plain varies with the kind of the paper.

The pigment inks disclosed in Japanese Patent Application Laid-Open Nos. 5-179183, 6-136311 and 7-53841 can provide images excellent in fastness properties such as water fastness and light fastness, and improve the print quality in plain paper to some extend. However, these inks have involved such problems as optical density becomes insufficient according to the kind of plain paper, and fixing ability becomes poor in plain paper that sufficient optical density can be attained.

On the other hand, the inks comprising a penetrating agent, 0.02 to 0.5 % by weight of an alginate and a solid wetting agent described in Japanese Patent Application Laid-Open No. 8-193176 can prevent bleeding and white haze phenomenon to some extent. However, the wettability of paper is enhanced due to the penetrating agent and solid wetting agent, so that feathering occurs at edge parts of characters printed, resulting in a failure to attain satisfactory character quality.

The inks described in Japanese Patent Application Laid-Open Nos. 6-57192 and 9-118850 cause aggregation of dyes or pigments at boundaries between different colors, so that bleeding can be prevented to some extent, and the quality of black characters is also improved to some extent. However, the aggregation occurs only at boundaries within a black region, so that white haze phenomenon that occurs in the black region cannot be prevented. On the other hand, Japanese Patent Application Laid-Open No. 7-314888 discloses the inks comprising the specific fluorine compound, in which the surface energy of a first ink is adjusted within 15 dyn/cm of the surface energy of a second ink. White haze phenomenon is reduced to some extent by this method. However, it has been insufficient to prevent the white haze phenomenon in the case of high speed recording in which different colors overlap one after other in a short period of time, or according to the kind of plain paper.

EP 0 692 527 A2 discloses a set of water-based pigment inks for an ink-jet, comprising a black pigment ink and other pigment inks different in hue from the black pigment ink.

EP 0 633 142 A1 discloses a process for alleviating bleed and improving color in printed elements by applying an anionic printing liquid and a cationic printing liquid to a substrate adjacent to one another, wherein at least one of the printing liquids contains a polymer and reacting the anionic and cationic printing liquids with one another.

US 5,198,023 discloses an ink set in which bleed between yellow and black inks is reduced by using a cationic yellow dye in the yellow ink and an anionic dye in the black ink.

EP 0 675 178 A2 discloses an ink set comprising a liquid composition containing a cationic substance, and a black ink in combination, the black ink containing a black dye, and a cyan dye and/or a yellow dye as water-soluble anionic dyes.

### SUMMARY OF THE INVENTION

It is therefore the first object of the present invention to provide an ink set for ink-jet, which can attain high optical density for images of black ink and has good fixing ability, irrespective of the kind of plain paper, and a recording method and recording instruments using such an ink set.

The second object of the present invention is to provide an ink set for ink-jet, which can attain high optical density for images of black ink, has good fixing ability and can provide prints excellent in fastness properties such as water fastness and light fastness, irrespective of the kind of plain paper, and a recording method and recording instruments using such an ink set.

The third object of the present invention is to provide an ink set which can provide black characters of high quality, prevent both bleeding and white haze and provide clear color images, irrespective of the kind of plain paper, and a recording method and recording instruments using such an ink set.

The above objects can be achieved by an ink set according to claim 1. Preferred embodiments are subject of the dependent claim 5.

When color recording of at least two colors is conducted by using both anionic black ink and cationic black ink as black inks, the black inks come into contact with each other on a recording medium, and so the coloring materials aggregate in themselves due to bonding between anion and cation and are fixed on the surface of the recording medium. As a result, only liquid media penetrate into the recording medium, so that high-quality black characters can be provided. Since the coloring materials of the black inks are fixed in all the region at boundary areas between the black ink and the color inks, both bleeding and white haze phenomenon can be substantially perfectly prevented. Since this effect is independent of the kind (for example, sizing agent and surface pH) of plain paper, the same effect can be brought about even in any plain paper. When the surface tensions of the color inks are adjusted to lower than 40 dyn/cm, the effect is more enhanced. When the penetrability of one of the two black inks is made higher, the fixing ability is also improved.

### BRIEF DESCRIPTION OF THE DRAWINGS

Fig. 1 is a longitudinal cross-sectional view of a head of an ink-jet recording apparatus.
Fig. 2 is a transverse cross-sectional view of the head of the ink-jet recording apparatus.
Fig. 3 is a perspective view of the appearance of a multi-head which is an array of such heads as shown in Fig. 1.
Fig. 4 is a perspective view illustrating an exemplary ink-jet recording apparatus.
Fig. 5 is a longitudinal cross-sectional view of an ink cartridge.
Fig. 6 is a perspective view of a recording unit.
Fig. 7 is a perspective view illustrating a recording part used in the present invention, in which two recording heads are arranged.
Fig. 8 illustrates an exemplary method for forming record dots.
Fig. 9 is a perspective view illustrating a recording part used in the present invention, in which five recording heads are arranged.

### DESCRIPTION OF THE PREFERRED EMBODIMENTS

The present invention will hereinafter be described in detail by the preferred embodiments of the invention.

The ink sets according to the present invention include two black inks different in polarity each other, i.e., ionicity, as black inks. The ionicity of each ink is changed by changing the ionicity of a coloring material used for the ink.

As coloring materials, may be used any known dyes and pigments. However, it is necessary to use cationic and anionic coloring material in combination.

In the ink set according to the embodiment (1), pigments are used as the coloring materials. The most preferable ink set is an ink set comprising a cationic pigment-dispersed ink and an anionic pigment-dispersed ink.

In the ink set according to the embodiment (2), it is necessary that a dye and a pigment be respectively used as coloring materials for both black inks, and a cationic and anionic coloring materials be used in combination. The most preferable ink set is an ink set comprising a cationic pigment-dispersed ink and an anionic water-based dye ink or an ink set comprising a cationic water-based dye ink and an anionic pigment-dispersed ink.

In the ink set according to the embodiment (3), two black inks different in polarity each other according to the embodiment (1) or (2) as black inks, and additional color inks are used. Dyes are used as coloring materials for the color inks. Any commercially available or known acid dyes, direct dyes, basic dyes, disperse dyes and the like may be suitably used. It is particularly preferable to use acid and direct dyes having an anionic group. The color inks preferably have a surface tension lower than 40 dyn/cm.

Components of each ink in the ink sets according to the present invention will hereinafter be described.

Carbon black and water-soluble black dyes are preferably used as coloring materials useful in the practice of the present invention.

A cationic dispersion of carbon black may be prepared by (1) dispersing carbon black using a dispersing agent such as a cationic surfactant or cationic polymer. However, (2) a dispersion of a self-dispersing type carbon black obtained by bonding at least one hydrophilic group directly or through another atomic group to the surface of carbon black is preferably used.

In the cationic carbon black dispersion (1), as examples of the cationic surfactant or cationic polymer used in dispersing carbon black, may be mentioned surfactants such as lauryltrimethylammonium chloride, stearylbenzyldimethylammonium chloride; or polymers such as copolymers of N,N-dimethylaminoethyl methacrylate acetate and an acrylic ester, and copolymers of N,N-dimethylaminopropyl methacrylamide and styrene.

In the self-dispersing type carbon black dispersion (2), the hydrophilic group bonded directly or through another atomic group to the surface of carbon black is preferably composed of at least one aromatic group, for example, a phenyl, benzyl, phenacyl or naphthyl group, or heterocyclic group, for example, a pyridyl group, and at least one cationic group. More preferably, the cationic group bonded to the surface of carbon black is a quaternary ammonium group. Those having a quaternary phosphonium group in place of the quaternary ammonium group may also be used.

Specific examples of the hydrophilic group bonded to the surface of carbon black preferably used in the present invention include those having the following structures. However, the hydrophilic groups used in the present invention are not limited to these groups. 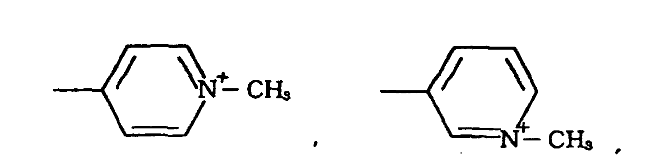 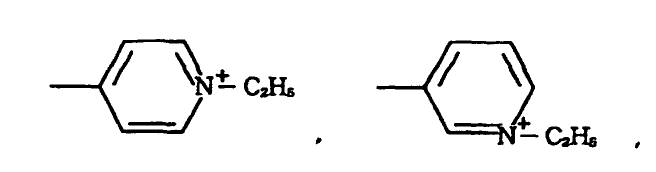 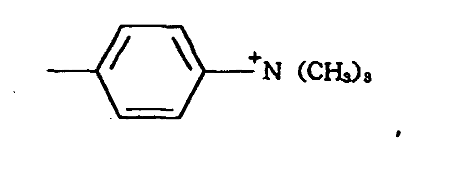 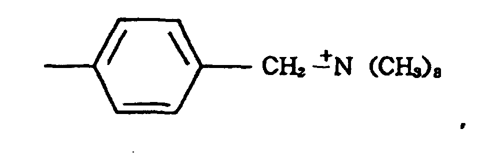 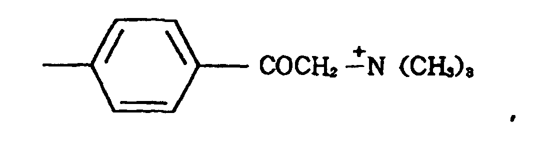 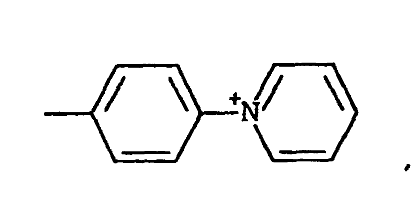 and

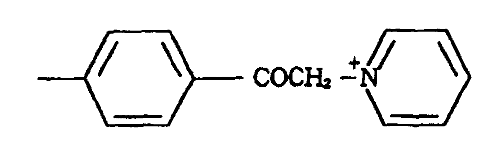

As a method for producing the cationic self-dispersing type carbon black with such a hydrophilic group as described above bonded to the surface thereof, a method for bonding, for example, an N-ethylpyridyl group having the following structure to the surface of carbon black includes a method in which carbon black is treated with 3-amino-N-ethylpyridinium bromide. It goes without saying that the present invention is not limited to this method.

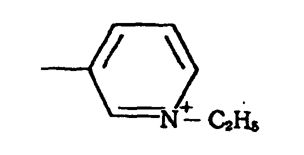

An anionic dispersion of carbon black may be prepared by (3) dispersing carbon black using a dispersing agent such as an anionic surfactant or anionic polymer. However, (4) a dispersion of a self-dispersing type carbon black like the self-dispersing type carbon black dispersion (2) is preferably used.

In the cationic carbon black dispersion (3), as examples of the anionic surfactant or anionic polymer used in dispersing carbon black, may be mentioned surfactants such as higher fatty acid salts and higher- alkyl sulfonic acid salts; or polymers such as styrene-acrylic acid copolymers and styrene-maleic acid copolymers.

In the self-dispersing type carbon black dispersion (4), as examples of the hydrophilic group bonded directly or through another atomic group to the surface of carbon black to impart anionic property to the carbon black, may be mentioned -COOM, -SO₃M and -SO₂NHCOR, wherein M is hydrogen, alkali metal, ammonium or organic ammonium, and R is an alkyl group having 1 to 12 carbon atoms, a phenyl group which may be substituted, or a naphthyl group which may be substituted. Of these, carbon black with -COOM or - SO₃M bonded to the surface thereof is preferably used in the present invention.

With respect to "M" in the above-described hydrophilic groups, examples of the alkali metal include lithium, sodium and potassium, and examples of the organic ammonium include mono-, di- and trimethylammonium, mono-, di- and triethylammonium, and mono-, di- and trimethanolammonium. As a method for obtaining the anionically charged carbon black, an example of a method for introducing -COONa in the surface of carbon black includes a method in which carbon black is subjected to an oxidation treatment with sodium hypochlorite. It goes without saying that the present invention is not limited to this method.

No particular limitation is imposed on the water-soluble black dye so far as it is a water-soluble dye having an anionic group, such as an acid dye, direct dye or reactive dye described in COLOR INDEX.

Any dye not described in COLOR INDEX may also be used without any particular limitation so far as it is an anionic water-soluble dye having an anionic group, for example, a sulfonic group or a carboxylic group, or a cationic water-soluble dye having a cationic group such as an amino group.

Among the water-soluble dyes used herein, those having dependence of solubility on pH may also be included as a matter of course.

No particular limitation is imposed on the content of the above-described carbon black or water-soluble black dye in the ink. However, it is preferably within a range of from 0.5 to 10.0 % by weight, particularly, from 1.0 to 8.0 % by weight, based on the total weight of the ink. The content within this range permits a further improvement in reliability as ink-jet ink, for example, optical density and ejection stability of ink.

The concentrations of the coloring materials used for two black inks may be adjusted so as to differ from each other to suitably select inks to be used according to the kind of a recording medium to be used and the desired record image or to change proportions of inks to be used. For example, when a pigment ink and a dye ink are used as two black inks to conduct recording on a recording medium such as glossy paper or coated paper, it is preferable that the concentration of a coloring material used for the dye ink be made higher.

With respect to water-soluble polymers used in the ink sets according to the present invention, a cationic water-soluble polymer is preferably used for the cationic ink, while an anionic water-soluble polymer is preferably used for the anionic ink. When the water-soluble polymer is added into the ink, the water-soluble polymer serves as a binder for aggregate of the dye and pigment when recording of a black color is conducted, so that the rub-off resistance of the resulting print is improved.

Examples of the water-soluble polymers used in the present invention include the following polymers.

The anionic polymers include polyacrylic acid and alkali salts thereof, polymethacrylic acid and alkali salts thereof, styrene-acrylic acid copolymers and alkali salts thereof, styrene-acrylic acid-alkyl acrylate terpolymers and alkali salts thereof, styrene-maleic acid copolymer and alkali salts thereof, styrene-maleic acid-alkyl acrylate terpolymers and alkali salts thereof, styrene-methacrylic acid copolymers and alkali salts thereof, styrene-methacrylic acid-alkyl acrylate terpolymers and alkali salts thereof, styrene-maleic half ester copolymers and alkali salts thereof, vinylnapthalene-maleic acid copolymers and alkali salts thereof, alginic acid and alkali salts thereof, polysaccharides such as carboxymethyl cellulose, and alkali salts thereof, and polyvinyl sulfate and alkali salts thereof. The alkali salts include salts with alkali metals such as sodium, lithium and potassium, and besides ammonium salts, alkylamine salts and alkanolamine salts. These polymers may be used either singly or in any combination thereof.

The cationic polymers include polyalkyleneimines including polyethyleneimine and polyisopropyleneimine; polyamines including polyalkylene polyamine, polyamide polyamine epichlorohydrin; water-soluble aniline resins and salts thereof; polythiourea and salts thereof; water-soluble cationized amino resins; polyvinyl pyridine and salt thereof; and cationically modified products of polyacrylamide. These polymers may be used either singly or in any combination thereof.

The content of these water-soluble polymers in the ink is generally within a range of from 0.01 to 10 % by weight, preferably from 0.1 to 5.0 % by weight, based on the total weight of the ink.

Aqueous media used in the ink sets according to the present invention are composed of a mixed medium of water and a water-soluble organic solvent. Specific examples of the water-soluble organic solvent include amides such as dimethylformamide and dimethylacetamide; ketones such as acetone; ethers such as tetrahydrofuran and dioxane; polyalkylene glycols such as polyethylene glycol and polypropylene glycol; alkylene glycols the alkylene moiety of which has 2 to 6 carbon atoms, such as ethylene glycol, propylene glycol, butylene glycol, triethylene glycol, thiodiglycol, hexylene glycol and diethylene glycol; 1,2,6-hexanetriol; glycerol; lower alkyl ethers of polyhydric alcohols, such as ethylene glycol monomethyl (or monoethyl) ether, diethylene glycol monomethyl (or monoethyl) ether and triethylene glycol monomethyl (or monoethyl) ether; N-methyl-2-pyrrolidone; 1,3-dimethyl-2-imidazolidinone; triethanolamine; sulfolane; dimethyl sulfoxide; cyclic amide compounds such as 2-pyrrolidone and ∈-caprolactam; and imide compounds such as succinimide.

The content of these water-soluble organic solvents in the inks is generally within a range of preferably from 1 to 80 % by weight, more preferably from 3 to 50 % by weight, based on the total weight of each ink. Purified water or ion-exchanged water is used as water, and the content of the water in the inks is generally within a range of preferably from 20 to 95 % by weight, more preferably from 30 to 90 % by weight, based on the total weight of each ink.

In the black inks of the ink sets according to the present invention, may be suitably incorporated additives such as surfactants, antiseptics, antioxidants, pH adjusters and water-soluble polymers in addition to the above-described components.

As coloring materials used for the color inks, may be used any dyes and pigments routinely used in color inks. Almost all acid dyes, direct dyes and reactive dyes may preferably be used. No particular limitation is imposed on the content of the coloring material in each color ink. However, it is preferably within a range of from 0.1 to 20 % by weight based on the total weight of the ink.

An aqueous medium used is composed of a mixed medium of water and an water-soluble organic solvent like the black inks. The content of the water-soluble organic solvent in each color ink is preferably within a range of from 1 to 80 % by weight based on the total weight of the ink.

Purified water or ion-exchanged water is used as water, and the content of the water in the color inks is generally within a range of preferably from 20 to 95 % by weight based on the total weight of each ink.

In the color inks, may be suitably incorporated additives such as surfactants, antiseptics, antioxidants, pH adjustors and water-soluble polymers in addition to the above-described components.

As the color inks, may be used-color inks such as yellow, magenta and cyan inks. The color inks preferably have a surface tension lower than 40 dyn/cm.

The recording method using any one of the ink sets according to the present invention will hereinafter be described.

In the present invention, two black inks different in an ionicity are used as black inks, and any method may be used as the recording method so far as it is a method by which the two inks can be caused to coexist on a recording medium. No problem arises if either ink is first applied to the recording medium. When the surface tension of one black ink is adjusted to at least 40 dyn/cm, preferably, within a range of from 40 to 60 dyn/cm, and the surface tension of the other black ink is adjusted to lower than 40 dyn/cm, preferably, within a range of from 25 to 39 dyn/cm for the purpose of more improving the fixing ability of the inks, however, it is preferable that the ink having a higher surface tension be applied first.

The color ink(s) are preferably applied to the recording medium before or after the application of the two black inks. It is not preferable to apply the color ink(s) between the application of the two black inks.

The recording method will hereinafter be described more specifically.

In the ink set according to the embodiment (1) or (2), two recording heads are provided for the respective black inks. In the ink set according to the embodiment (3), two recording heads for the black inks and three recording heads for the yellow, magenta and cyan inks are provided.

One of the recording heads for the black inks is used for the cationic black ink, and the other for the anionic black ink. For example, each 50 % of both black inks is used for a region in which a black image is formed. No particular limitation is imposed on proportions of both inks used. It is however desirable that both inks be used in a ratio of from 1:9 to 9:1, preferably from 2:8 to 8:2 to form a black image. If the ratio is outside the above range, the effect of the coloring materials used for both inks on aggregation becomes insufficient, so that the desired effect cannot be achieved. As a method for causing both black inks to coexist on the recording medium, it is permissible either to apply both inks to a place corresponding to the same record dot on the recording medium or to alternately apply both inks to places corresponding to adjoining record dots. However, it is necessary to bring both inks into contact with each other on the recording medium.

No particular limitation is imposed on the time required from the time one black ink is applied to the recording medium up to the time the other black ink is then applied. In order to more effectively work the present invention, however, it is preferable to apply both black inks at an interval within several seconds, particularly preferably 3 seconds.

Recording apparatus useful in the practice of the present invention will hereinafter be described. As a preferred method and apparatus for conducting recording by using any one of the ink sets according to the present invention, may be mentioned a method and apparatus in which thermal energy corresponding to recording signals is applied to an ink within a recording head, and ink droplets are generated by the thermal energy.

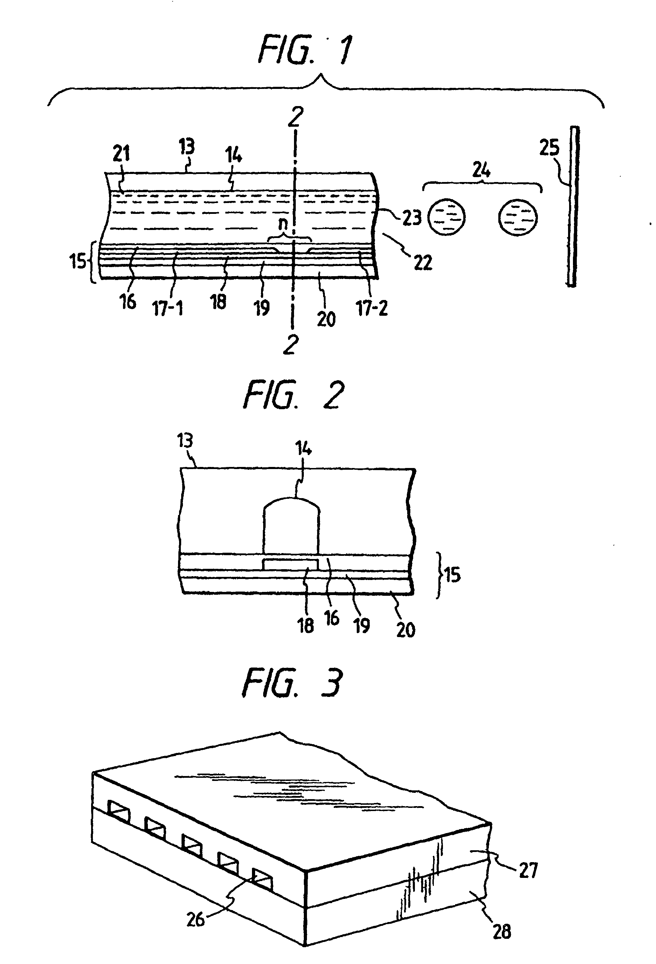

Examples of the construction of a recording head, which is a main component of such an apparatus, are illustrated in Figs. 1, 2 and 3.

A head 13 is formed by bonding a glass, ceramic or plastic plate or the like having a groove 14 through which an ink is passed, to a heating head 15 having a heating resistor, which is used for thermal recording (the drawings show a head to which, however, the invention is not limited). The heating head 15 is composed of a protective film 16 made of silicon oxide or the like, aluminum electrodes 17-1 and 17-2, a heating resistor layer 18 made of nichrome or the like, a heat accumulating layer 19, and a substrate 20 made of alumina or the like having a good heat radiating property.

An ink 21 comes up to an ejection orifice (a minute opening) 22 and forms a meniscus 23 due to a pressure not illustrated.

Now, upon application of electric signals to the electrodes 17-1 and 17-2, the heating head 15 rapidly generates heat at the region shown by n to form bubbles in the ink 21 which is in contact with this region. The meniscus 23 of the ink is projected by the pressure thus produced, and the ink 21 is ejected from the ejection orifice 22 to a recording medium 25 in the form of minute droplets 24.

Fig. 3 illustrates an appearance of a multi-head composed of an array of a number of heads as shown in Fig. 1. The multi-head is formed by closely bonding a glass plate 27 having a number of grooves 26 to a heating head 28 similar to the head as illustrated in Fig. 1.

Incidentally, Fig. 1 is a cross-sectional view of the head 13 taken along the flow path of the ink, and Fig. 2 is a cross-sectional view taken along line 2-2 in Fig. 1.

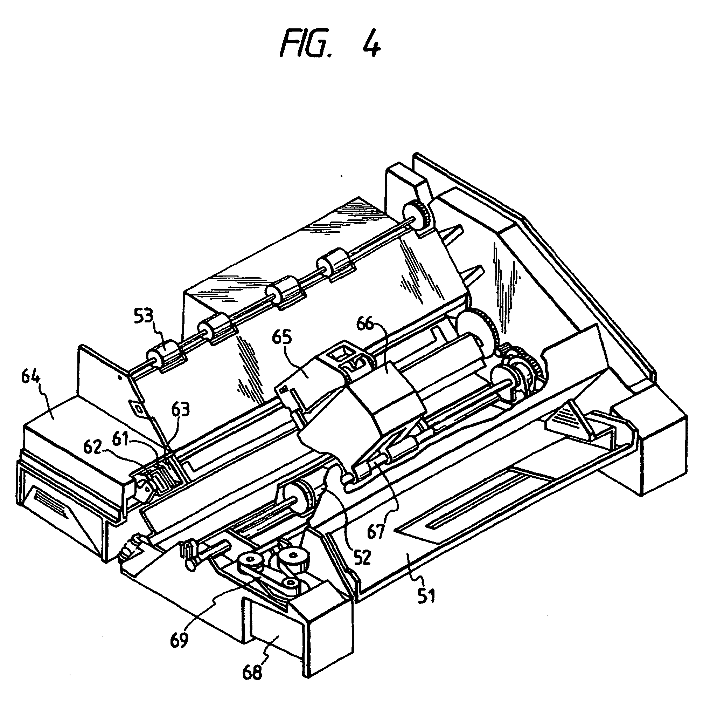

Fig. 4 illustrates an example of an ink-jet recording apparatus in which the above head has been incorporated.

In Fig. 4, reference numeral 61 designates a blade serving as a wiping member, one end of which is a stationary end held by a blade-holding member to form a cantilever. The blade 61 is provided at a position adjacent to a region in which a recording head 65 operates, and in this embodiment, is held in such a form that it protrudes into the course through which the recording head 65 is moved.

Reference numeral 62 indicates a cap for a face of ejection openings of the recording head 65, which is provided at a home position adjacent to the blade 61, and is so constructed that it moves in a direction perpendicular to a direction in which the recording head 65 is moved, and comes into contact with the face of ejection openings to cap it. Reference numeral 63 denotes an ink-absorbing member provided adjoiningly to the blade 61 and, similar to the blade 61, held in such a form that it protrudes into the course through which the recording head 65 is moved. The above-described blade 61, cap 62 and absorbing member 63 constitute an ejection-recovery portion 64, where the blade 61 and absorbing member 63 remove water, dust and/or the like from the face of the ink-ejecting openings.

Reference numeral 65 designates the recording head having an ejection-energy-generating means and serving to eject the ink onto a recording medium set in an opposing relation to the ejection opening face provided with the ejection openings to conduct recording. Reference numeral 66 indicates a carriage on which the recording head 65 is mounted so that the recording head 65 can be moved. The carriage 66 is slidably interlocked with a guide rod 67 and is connected (not illustrated) at its part to a belt 69 driven by a motor 68. Thus, the carriage 66 can be moved along the guide rod 67 and hence, the recording head 65 can be moved from a recording region to a region adjacent thereto.

Reference numerals 51 and 52 denote a paper feeding part from which the recording media are separately inserted, and paper feed rollers driven by a motor (not illustrated), respectively. With such a construction, the recording medium is fed to the position opposite to the ejection opening face of the recording head 65, and discharged from a discharge section provided with discharge rollers 53 with the progress of recording.

In the above construction, the cap 62 in the head recovery portion 64 is receded from the path of motion of the recording head 65 when the recording head 65 is returned to its home position, for example, after completion of recording, and the blade 61 remains protruded into the path of motion. As a result, the ejection opening face of the recording head 65 is wiped. When the cap 62 comes into contact with the ejection opening face of the recording head 65 to cap it, the cap 62 is moved so as to protrude into the path of motion of the recording head 65.

When the recording head 65 is moved from its home position to the position at which recording is started, the cap 62 and the blade 61 are at the same positions as the positions for the wiping as described above. As a result, the ejection opening face of the recording head 65 is also wiped at the time of this movement.

The above movement of the recording head 65 to its home position is made not only when the recording is completed or the recording head 65 is recovered for ejection, but also when the recording head 65 is moved between recording regions for the purpose of recording, during which it is moved to the home position adjacent to each recording region at given intervals, where the ejection opening face is wiped in accordance with this movement.

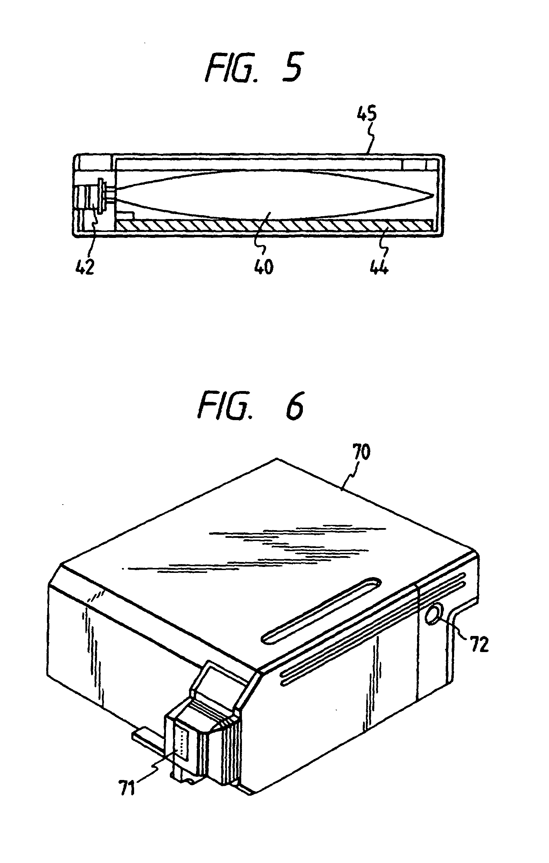

Fig. 5 illustrates an exemplary ink cartridge 45 in which an ink to be fed to the head through an ink-feeding member, for example, a tube is contained. Here, reference numeral 40 designates an ink container portion containing the ink to be fed, as exemplified by a bag for the ink. One end thereof is provided with a stopper 42 made of rubber. A needle (not illustrated) may be inserted into this stopper 42 so that the ink in the bag 40 for the ink can be fed to the head. Reference numeral 44 indicates an ink-absorbing member for receiving a waste ink. It is preferred that the ink container portion be formed of a polyolefin, in particular, polyethylene, at its surface with which the ink comes into contact.

The ink-jet recording apparatus used in the present invention are not limited to the apparatus as described above in which the head and the ink cartridge are separately provided. Therefore, a device in which these members are integrally formed as shown in Fig. 6 can also be preferably used.

In Fig. 6, reference numeral 70 designates a recording unit, in the interior of which an ink container portion containing an ink, for example, an ink-absorbing member, is contained. The recording unit 70 is so constructed that the ink in such an ink-absorbing member is ejected in the form of ink droplets through a head 71 having a plurality of orifices. In the present invention, polyurethane, cellulose or polyvinyl acetate is preferably used as a material for the ink-absorbing member.

Reference numeral 72 indicates an air passage for communicating the interior of the recording unit 70 with the atmosphere. This recording unit 70 can be used in place of the recording head 65 shown in Fig. 4, and is detachably installed on the carriage 66.

Incidentally, in the recording apparatus used in the present invention, the ink-jet recording apparatus in which thermal energy is applied to an ink to eject droplets of the ink has been described by way of example. However, the present invention can also be used in other ink-jet recording apparatus such as a piezo-system using a piezoelectric element.

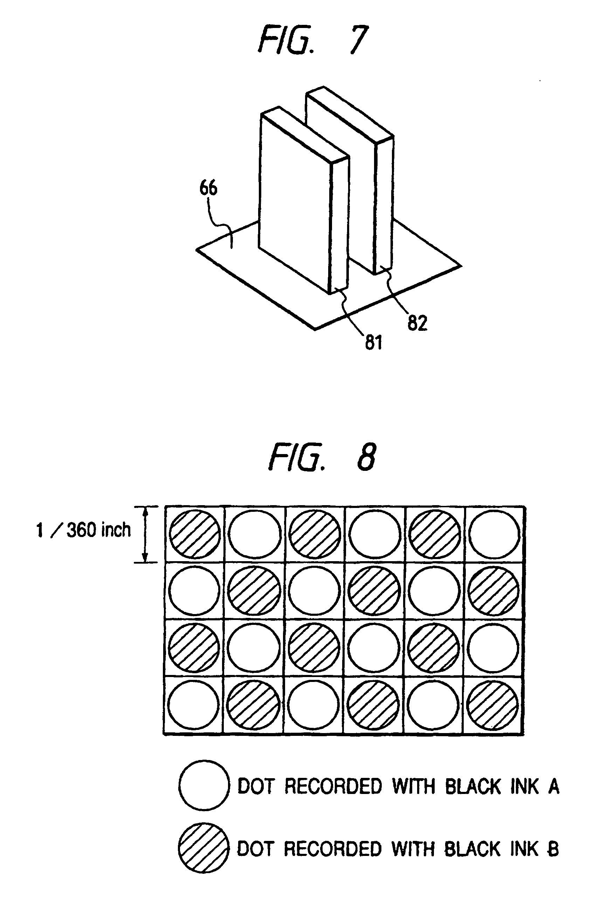

In the case where the recording method according to the present invention is carried out, for example, a recording apparatus in which two recording heads, each of which has been illustrated in Fig. 3, are arranged on a carriage 66, is used for the ink sets according to the embodiments (1) and (2). An example thereof is illustrated in Fig. 7. Reference numerals 81 and 82 indicate recording heads for ejecting black inks different in ionicity, respectively. The recording heads are arranged in the above-described recording apparatus and serve to eject the respective inks in response to recording signals. Fig. 7 shows the case where the two recording heads have been used. However, the present invention is not limited thereto.

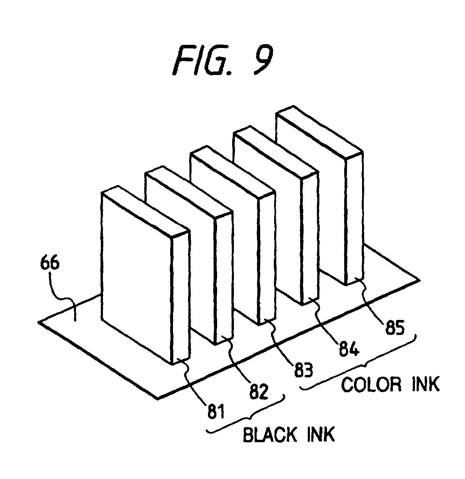

On the other hand, for example, a recording apparatus in which five recording heads, each of which has been illustrated in Fig. 3, are arranged on a carriage 66, is used for the ink sets according to the embodiment (3). An example thereof is illustrated in Fig. 9. Reference numerals 81 and 82 indicate recording heads for black inks adapted for ejecting black inks different in ionicity, respectively, and reference numerals 83, 84 and 85 designate recording heads for ejecting inks of yellow, magenta and cyan colors, respectively. The recording heads are arranged in the above-described recording apparatus and serve to eject the respective inks in response to recording signals.

The present invention will hereinafter be described more specifically by the following Examples and Comparative Examples. Incidentally, all designations of "part" or "parts" and "%" as will be used in the following examples mean part or parts by weight and % by weight unless expressly noted.

First of all, the preparation of carbon black and pigment dispersions used in Examples and Comparative Examples will be described.

### Carbon Black 1:

To a solution with 3.08 g of H₃N⁺C₆H₄N⁺(CH₃)₃Cl⁻·I⁻ dissolved in 30 g of water, were added 1.69 g of silver nitrate with stirring. Precipitate formed was removed by filtration, and the resultant filtrate was added with stirring to a suspension with 10 g of carbon black having a surface area of 230 m²/g and a DBPA (oil absorption measured with dibutyl phthalate) of 70 ml/100 g dispersed in 70 g of water. After 2.25 g of concentrated hydrochloric acid were then added to the resultant mixture, a solution with 0.83 g of sodium nitrite dissolved in 10 g of water was added. As a result, a diazonium salt with an NN⁺C₆H₄N⁺(CH₃)₃ group having the following structure reacted to carbon black, thereby generating nitrogen gas. After the nitrogen gas ceased to bubble, the resultant dispersion was dried in an oven controlled to 120°C, thereby obtaining a product with a C₆H₄N⁺(CH₃)₃ group bonded to the surface of the carbon black.

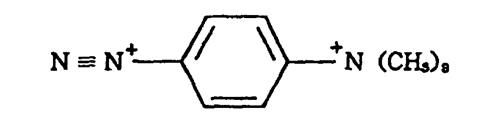

### Carbon Black 2:

A solution containing 2.12 g of 4-acetaminophenacyl chloride, 0.83 g of pyridine and 6.4 g of dimethyl sulfoxide was stirred overnight. After 0.8 g of pyridine and 1 g of dimethyl sulfoxide were additionally added, the solution was stirred for additional 5 hours. After 50 ml of ether were added, acetamidophenacylpyridinium chloride formed was collected by filtration. After the thus-obtained acetamidophenacylpyridinium chloride was dissolved in water, and the resultant solution was filtered, 1.7 g of concentrated hydrochloric acid were added to the filtrate. After the solution was boiled for 1 hour, it was cooled, and acetone was added thereto. The resultant mixture was filtered to obtain 4-aminophenacylpyridinium chloride hydrochloride.

In 15 g of water, were dissolved 2 g of the thus-obtained 4-aminophenacylpyridinium chloride hydrochloride, and 4.5 g of a basic ion-exchange resin (Amberlite IRA400-OH) were added to the solution. After stirring the mixture, it was filtered to remove the ion-exchange resin, thereby obtaining an aqueous solution of 4-aminophenacylpyridinium chloride. The aqueous solution containing 1.3 g of 4-aminophenacylpyridinium chloride in 25 g of water was refluxed with 1 g of silver nitrate for 90 minutes. Precipitate formed was removed by filtration. To the resultant filtrate, were added 5 g of carbon black having a surface area of 200 m²/g and a DBPA of 122 ml/100 g, and the resultant mixture was heated to about 80°C. After 0.52 g of concentrated hydrochloric acid were added, a solution of sodium nitrite in a small amount of water was added, and the resultant dispersion was stirred for 1.5 hours. As a result, a diazonium salt with an NN⁺C₆H₄COCH₂(N⁺C₅H₅) group having the following structure was formed and reacted to carbon black, thereby obtaining a product with a C₆H₄COCH₂(N⁺C₅H₅) group bonded to the surface of the carbon black.

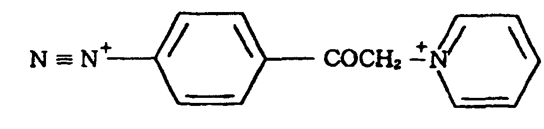

### Pigment Dispersion 1:

Fifteen parts of a styrene-acrylic acid-ethyl acrylate terpolymer (acid value: 174; weight average molecular weight: 18,000), 4.5 parts of monoethanolamine, 5 parts of ethylene glycol and 57 parts of water were mixed, and the mixture was heated to 70°C in a water bath, thereby completely dissolving the resin. At this time, the resin may not be completely dissolved if the concentration of the resin to be dissolved is low. Therefore, the desired resin solution may also be prepared by preparing a high-concentration solution in advance and diluting this solution. To this solution, were added 10 parts of carbon black (MCF-88, trade name; pH: 8.0; product of Mitsubishi Chemical Industries Limited) and 5 parts of ethanol to premix the components for 30 minutes. Thereafter, the resultant premix was subjected to a dispersion treatment under the following conditions.
Dispersing machine: sand grinder (manufactured by Igarashi Kikai K.K.)
Grinding medium: zirconium beads (diameter: 1 mm)
Packing rate of grinding medium: 50 % (by volume)
Grinding time: 3 hours.

The thus-treated mixture was further subjected to a centrifugal treatment (12,000 rpm, 20 minutes) to remove coarse particles, thereby obtaining Pigment Dispersion 1. This dispersion is a dispersion containing carbon black dispersed with the anionic resin.

### Pigment Dispersion 2:

After 300 g of acid carbon black ("MA-8", trade name; product of Mitsubishi Chemical Industries Limited) were thoroughly mixed with 1,000 ml of water, 450 g of sodium hypochlorite (available chlorine concentration: 12 %) were added dropwise to the mixture. The resultant mixture was stirred for 8 hours at 100 to 105°C to oxidize the carbon black. The resultant slurry was filtered through Toyo Filter Paper No. 2 and then fully washed with water to remove salts by-produced. The resultant wet cake was dispersed again in 3,000 ml of water, and the dispersion was purified and concentrated with a reverse osmosis membrane to obtain Pigment Dispersion 2 containing the pigment at a concentration of 10 % by weight. According to this process, a self-dispersing type anionic carbon black with a group -COONa bonded to the surface of the carbon black was obtained, and such carbon black was dispersed in a stable state in Pigment Dispersion 2.

### Pigment Dispersion 3:

Two parts of a poly-N,N'-dimethyl-3,5-methylene-piperidinium salt (Mw: 3,700), 5 parts of diethylene glycol and 78 parts of ion-exchanged water were mixed, and the mixture was heated to 70°C in a water bath, thereby completely dissolving the resin. To this solution, were added 15 parts of carbon black having a surface area of 180 m²/g and a DBPA of 122 ml/100 g to premix the components for 30 minutes. Thereafter, the resultant premix was subjected to a dispersion treatment under the following conditions.
Dispersing machine: sand grinder (manufactured by Igarashi Kikai K.K.)
Grinding medium: zirconium beads (diameter: 1 mm)
Packing rate of grinding medium: 50 % (by volume)
Grinding time: 3 hours.

The thus-treated mixture was further subjected to a centrifugal treatment (12,000 rpm, 20 minutes) to remove coarse particles, thereby obtaining Pigment Dispersion 3. This dispersion is a dispersion containing carbon black dispersed with the cationic resin.

### Pigment Dispersion 4:

After 300 g of commercially available acid carbon black ("MA-77", trade name; pH: 3.0; product of Mitsubishi Chemical Industries Limited) were thoroughly mixed with 1,000 ml of water, 450 g of sodium hypochlorite (available chlorine concentration: 12 %) were added dropwise to the mixture, and the mixture was stirred for 10 hours at 100 to 105°C. The resultant slurry was filtered through Toyo Filter Paper No. 2 (product of Advantes Co.), and the resultant pigment particles were fully washed with water. The wet cake of this pigment was dispersed again in 3,000 ml of water, and the dispersion was desalted by means of a reverse osmosis membrane to a conductivity of 0.2 µs. The pigment dispersion (pH: 8 to 10) was concentrated to a pigment concentration of 10 % by weight. The above-described process was followed to obtain Pigment Dispersion 4 in which a self-dispersing type carbon black anionically charged with a hydrophilic group -COO⁻ directly bonded to the surface of the carbon black was dispersed.

### Pigment Dispersion 5:

After 10 g of carbon black having a surface area of 230 m²/g and a DBP oil absorption of 70 ml/100 g and 3.41 g of p-aminobenzoic acid were thoroughly mixed with 72 g of water, 1.62 g of nitric acid were added dropwise thereto, and the resultant mixture was stirred at 70°C. After several minutes, a solution of 1.07 g of sodium nitrite in 5 g of water was further added to the mixture, and the resultant mixture was stirred for an additional 1 hour. The resultant slurry was filtered through Toyo Filter Paper No. 2 (product of Advantes Co.), and the resultant pigment particles were fully washed with water and dried in an oven controlled to 90°C. Water was then added to the dried pigment to prepare an aqueous dispersion containing the pigment at a concentration of 10 % by weight. The above-described process was followed to obtain Pigment Dispersion 5 in which a self-dispersing type carbon black anionically charged with a hydrophilic group bonded to the surface of the carbon black through a phenyl group as shown below was dispersed.

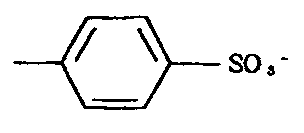

### Pigment Dispersion 6:

To a solution of 5 g of concentrated hydrochloric acid in 5.3 g of water, were added 1.58 g of anthranilic acid at 5°C. The mixture was stirred in an ice bath, thereby always holding it at 10°C or lower. In this state, a solution with 1.78 g of sodium nitrite dissolved in 8.7 g of water at 5°C was added. After stirring the resultant mixture for 15 minutes, 20 g of carbon black having a surface area of 320 m²/g and a DBP oil absorption of 120 ml/100 g were added to the mixture with stirring. The resultant mixture was then stirred for additional 15 minutes. The resultant slurry was filtered through Toyo Filter Paper No. 2 (product of Advantes Co.), and the resultant pigment particles were fully washed with water and dried in an oven controlled to 110°C. Water was added to the dried pigment to prepare an aqueous dispersion containing the pigment at a concentration of 10 % by weight. The above-described process was followed to obtain Pigment Dispersion 6 in which a self-dispersing type carbon black anionically charged with a hydrophilic group bonded to the surface of the carbon black through a phenyl group as shown below was dispersed.

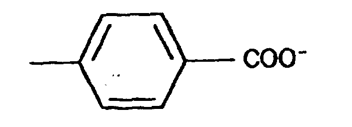

### Examples 1 to 5 and Comparative Examples 1 and 2:

Ink sets according to Examples 1 to 5 were respectively prepared by combining two inks as black inks with each. Each ink was prepared in the following manner. After its corresponding components described below were mixed into a solution, the solution was filtered under reduced pressure through a microfilter (product of Fuji Photo Film Co., Ltd.) having a pore size of 3.0 µm, with regard to black inks of Examples 1 to 5, thereby preparing inks.

### Example 1:

| Black Ink A: | |
|---|---|
| Carbon Black 1 (cationic) | 4 parts |
| Diethylene glycol | 15 parts |
| Water | 81 parts. |

| Black Ink B: | |
|---|---|
| Pigment Dispersion 2 (anionic) | 30 parts |
| Glycerol | 5 parts |
| Triethylene glycol | 5 parts |
| Ethanol | 4 parts |
| Water | 56 parts. |

The above-described Black Inks A and B had surface tensions of 52 dyn/cm and 49 dyn/cm, respectively.

### Example 2:

| Black Ink A: | |
|---|---|
| Pigment Dispersion 1 (anionic) | 30 parts |
| Glycerol | 5 parts |
| 2-Pyrrolidone | 5 parts |
| Isopropyl alcohol | 3 parts |
| Water | 57 parts. |

| Black Ink B: | |
|---|---|
| Pigment Dispersion 3 (cationic) | 20 parts |
| Diethylene glycol | 10 parts |
| Ethylene glycol | 5 parts |
| Water | 65 parts. |

The above-described Black Inks A and B had surface tensions of 50 dyn/cm and 46 dyn/cm, respectively.

### Example 3:

| Black Ink A: | |
|---|---|
| Carbon Black 2 (cationic) | 5 parts |
| Triethylene glycol | 5 parts |
| 1,5-Pentanediol | 5 parts |
| Isopropyl alcohol | 4 parts |
| Water | 81 parts. |

| Black Ink B: | |
|---|---|
| Pigment Dispersion 2 (anionic) | 30 parts |
| Glycerol | 5 parts |
| Triethylene glycol | 5 parts |
| Diethylene glycol | 4 parts |
| Triethylene glycol monobutyl ether | 4 parts |
| Water | 52 parts. |

The above-described Black Inks A and B had surface tensions of 48 dyn/cm and 38 dyn/cm, respectively.

### Example 4:

| Black Ink A: | |
|---|---|
| Carbon Black 2 (cationic) | 5 parts |
| Diethylene glycol | 5 parts |
| 1,5-Pentanediol | 5 parts |
| Isopropyl alcohol | 4 parts |
| Water | 81 parts. |

| Black Ink B: | |
|---|---|
| Pigment Dispersion 2 (anionic) | 30 parts |
| Glycerol | 5 parts |
| Triethylene glycol | 5 parts |
| Acetylenol EH (trade name, product of Kawaken Fine Chemicals Co., Ltd.) | 0.7 parts |
| Water | 59.3 parts. |

The above-described Black Inks A and B had surface tensions of 47 dyn/cm and 32 dyn/cm, respectively.

### Example 5:

| Black Ink A: | |
|---|---|
| Astrazon Black FDL (cationic, product of Dystar Co.) | 5 parts |
| Glycerol | 5 parts |
| Diethylene glycol | 7 parts |
| Ethanol | 3 parts |
| Water | 80 parts. |

| Black Ink B: | |
|---|---|
| C.I. Direct Black 195 (anionic) | 3 parts |
| Glycerol | 5 parts |
| Thiodiglycol | 5 parts |
| Sodium hydroxide | 0.5 parts |
| Diethylene glycol | 5 parts |
| Water | 81.5 parts. |

The above-described Black Inks A and B had surface tensions of 48 dyn/cm and 47 dyn/cm, respectively.

### Comparative Example 1:

Black Ink A prepared in Example 1 was used in two recording heads to conduct recording.

### Comparative Example 2:

Black Ink B prepared in Example 1 was used in two recording heads to conduct recording.

The respective inks of the above-described Examples and Comparative Examples were used to conduct recording on commercially available paper for copying (Canon PB paper and Xerox 4024 paper) and bond paper (Plover Bond).

As an ink-jet recording apparatus, was used a recording apparatus similar to that shown in Fig. 4. Images were formed using 2 recording heads as illustrated in Fig. 7. Incidentally, the recording heads used herein were the same recording heads as that used in BJC820 (trade name, ink-jet printer manufactured by Canon Inc.). Drive conditions for the recording heads, namely, energizing conditions for a heater in each head were as follows:
Applied voltage: 28 V
Pulse width: 3.2 µsec
Drive frequency: 5 kHz.

In the present invention, two black inks, i.e., Black Ink A and Black Ink B are used as black inks. Therefore, Black Ink A was used in one recording head, and Black Ink B in the other recording head to conduct the recording. In Comparative Examples, one and the same black ink was used in two recording heads to conduct the recording.

In each example, the record image was formed by using the two recording heads to make a record of 50 % duty by one recording head and make the remaining record of 50 % duty by the other recording head so as to give 100 % duty. Record dots were formed by such a method as illustrated in Fig. 8. In Fig. 8, open circles are record dots formed by Black Ink A, and hatched circles are record dots formed by Black Ink B. Incidentally, in Examples 3 and 4, a black ink having a higher surface tension was charged into a leading recording head in order that the black ink may impact first on a recording medium.

The record images obtained in Examples 1 to 5 and Comparative Examples 1 and 2 were evaluated as to optical density and fixing ability. The results thereof are shown in Table 1. The evaluation of the record images was conducted in accordance with the following respective methods.

### [Optical density]

English characters and numerals and a solid print were recorded on commercially available paper for copying (Canon PB paper and Xerox 4024 paper) and bond paper (Plover Bond). After left to stand for 1 hour, its optical density was measured by a Macbeth RD915 (trade name, manufactured by Macbeth Company), and evaluation was made in accordance with the following standard:
A: Density was not lower than 1.25;
B: Density was from 1.15 to 1.25; and
C: Density was lower than 1.15.

### [Fixing ability]

A solid print was recorded on commercially available paper for copying (Canon PB paper and Xerox 4024 paper) and bond paper (Plover Bond). After the recording, the time by which staining no longer occurred even when the solid print area was rubbed with fingers was measured. Evaluation was made in accordance with the following standard:
A: Staining no longer occurred in shorter than 30 seconds;
B: Staining no longer occurred in from 30 to 50 seconds.
C: Marked staining occurred even in longer than 50 seconds.

**Table 1**

| | Optical density | | | Fixing ability |
|---|---|---|---|---|
| | PB paper | Xerox 4024 paper | Bond paper | |
| Ex. 1 | A | A | A | B |
| Ex. 2 | A | A | A | B |
| Ex. 3 | A | A | A | A |
| Ex. 4 | A | A | A | A |
| Ex. 5 | A | A | A | A |
| Comp. Ex. 1 | C | B | A | B |
| Comp. Ex. 2 | C | H | B | B |

### Examples 6 to 11 and Comparative Examples 3 and 4:

Ink sets according to Examples 6 to 11 were respectively prepared by combining two inks as black inks with each.

Each ink was prepared in the following manner. After its corresponding components described below were mixed into a solution, the solution was filtered under reduced pressure through a microfilter (product of Fuji Photo Film Co., Ltd.) having a pore size of 3 µm when the ink was a pigment ink, or through a microfilter (product of Fuji Photo Film Co., Ltd.) having a pore size of 0.2 µm when the ink was a dye ink, thereby preparing inks.

### Example 6:

| Cationic black ink: | |
|---|---|
| Carbon Black 1 (cationic) | 4.0 parts |
| Glycerol | 5.0 parts |
| Triethylene glycol | 5.0 parts |
| Polyallylamine | 3.0 parts |
| Water | 83.0 parts. |

| Anionic black ink: | |
|---|---|
| C.I. Direct Black 195 | 2.5 parts |
| Glycerol | 5.0 parts |
| Diethylene glycol | 5.0 parts |
| Sodium hydroxide | 0.5 parts |
| Water | 87.0 parts. |

The above-described cationic black ink and anionic black ink had surface tensions of 52 dyn/cm and 46 dyn/cm, respectively.

### Example 7:

| Cationic black ink: | |
|---|---|
| Carbon Black 2 (cationic) | 4.0 parts |
| Glycerol | 5.0 parts |
| Diethylene glycol | 5.0 parts |
| Polyethylene polyamine | 2.0 parts |
| Water | 84.0 parts. |

| Anionic black ink: | |
|---|---|
| C.I. Food Black 2 | 3.0 parts |
| Glycerol | 5.0 parts |
| Ethylene glycol | 7.0 parts |
| Triethylene glycol | 4.0 parts |
| Sodium polyacrylate | 0.5 parts |
| Water | 78.5 parts. |

The above-described cationic black ink and anionic black ink had surface tensions of 51 dyn/cm and 43 dyn/cm, respectively.

### Example 8:

| Cationic black ink: | |
|---|---|
| Pigment Dispersion 3 (cationic) | 30.0 parts |
| Glycerol | 7.0 parts |
| 2-Pyrrolidone | 5.0 parts |
| Isopropyl alcohol | 3.0 parts |
| Water | 55.0 parts. |

| Anionic black ink: | |
|---|---|
| C.I. Direct Black 195 | 2.5 parts |
| Glycerol | 5.0 parts |
| Diethylene glycol | 5.0 parts |
| Ethylene glycol | 5.0 parts |
| Acetylenol EH (trade name, product of Kawaken Fine Chemicals Co., Ltd.) | 0.5 parts |
| Water | 82.0 parts. |

The above-described cationic black ink and anionic black ink had surface tensions of 48 dyn/cm and 33 dyn/cm, respectively.

### Example 9:

| Cationic black ink: | |
|---|---|
| Astrazon Black SW (trade name, product of Bayer AG) | 5.0 parts |
| Glycerol | 5.0 parts |
| Ethylene glycol | 7.0 parts |
| Polyethyleneimine | 1.0 parts |
| Water | 82.0 parts. |

| Anionic black ink: | |
|---|---|
| Pigment Dispersion 2 (anionic) | 30.0 parts |
| Ethylene glycol | 5.0 parts |
| Triethylene glycol | 10.0 parts |
| Sodium polymethacrylate | 0.5 parts |
| Water | 54.5 parts. |

The above-described cationic black ink and anionic black ink had surface tensions of 48 dyn/cm and 52 dyn/cm, respectively.

### Example 10:

| Cationic black ink: | |
|---|---|
| Kayacel Black CN (trade name, product of Nippon Kayaku Co., Ltd.) | 5.0 parts |
| Ethylene glycol | 10.0 parts |
| Triethylene glycol | 5.0 parts |
| Polyisopropyleneimine | 0.5 parts |
| Water | 80.5 parts. |

| Anionic black ink: | |
|---|---|
| Pigment Dispersion 1 (anionic) | 25.0 parts |
| Ethylene glycol | 7.0 parts |
| Triethylene glycol | 8.0 parts |
| Water | 60.0 parts. |

The above-described cationic black ink and anionic black ink had surface tensions of 50 dyn/cm and 53 dyn/cm, respectively.

### Example 11:

| Cationic black ink: | |
|---|---|
| Kayacel Black CN (trade name, product of Nippon Kayaku Co., Ltd.) | 4.0 parts |
| Glycerol | 7.0 parts |
| Ethylene glycol | 5.0 parts |
| Urea | 5.0 parts |
| Water | 79.0 parts. |

| Anionic black ink: | |
|---|---|
| Pigment Dispersion 2 (anionic) | 30.0 parts |
| Ethylene glycol | 5.0 parts |
| Triethylene glycol | 10.0 parts |
| Water | 55.0 parts. |

The above-described cationic black ink and anionic black ink had surface tensions of 48 dyn/cm and 54 dyn/cm, respectively.

### Comparative Example 3:

Only the cationic black ink prepared in Example 6 was used to conduct recording.

### Comparative Example 4:

Only the anionic black ink prepared in Example 11 was used to conduct recording.

The respective inks of the above-described Examples and Comparative Examples were used to conduct recording on commercially available paper for copying (Canon PB paper and Xerox 4024 paper) and bond paper (Plover Bond).

As an ink-jet recording apparatus, was used a recording apparatus similar to that shown in Fig. 4. Images were formed using 2 recording heads as illustrated in Fig. 7. Incidentally, the recording heads used herein were the same recording heads as that used in BJC820 (trade name, ink-jet printer manufactured by Canon Inc.). Drive conditions for the recording heads, namely, energizing conditions for a heater in each head were as follows:
Applied voltage: 28 V
Pulse width: 3.2 µsec
Drive frequency: 5 kHz.

In the present invention, two black inks, i.e., a cationic black ink and an anionic black ink are used as black inks. Therefore, the cationic black ink was used in one recording head, and the anionic black ink in the other recording head to conduct the recording. In Comparative Examples, one and the same black ink was used in two recording heads to conduct the recording.

In each example, the record image was formed by using the two recording heads to make a record of 50 % duty by one recording head and make the remaining record of 50 % duty by the other recording head so as to give 100 % duty. Record dots were formed by such a method as illustrated in Fig. 8.

The record images obtained in Examples 6 to 11 and Comparative Examples 3 and 4 were evaluated as to optical density, water fastness and fixing ability. The results thereof are shown in Table 2. The evaluation of the record images as to the water fastness was conducted in accordance with the following method. The evaluation as to the other properties was conducted in the same manner as in Example 1.

### [Water fastness]

After English characters and numerals and solid prints were recorded on commercially available paper for copying (Canon PB paper and Xerox 4024 paper) and bond paper (Plover Bond), and the resulting samples were left to stand for a predetermined period of time, water was dropped on each print area with a dropping pipette to measure the time by which ink running toward the blank portion of the recording medium and blurring of the English characters and numerals occurred no longer. Evaluation was made in accordance with the following standard:
A: Neither ink running toward the blank portion nor blurring of the English characters and numerals occurred in 5 minutes after the recording;
B: Neither ink running toward the blank portion nor blurring of the English characters and numerals occurred in 1 hour after the recording;
C: Both ink running toward the blank portion and blurring of the English characters and numerals occurred even in 1 hour or longer after the recording.

**Table 2**

| | Optical density | | | Water fastness | Fixing ability |
|---|---|---|---|---|---|
| | PB paper | Xerox 4024 paper | Bond paper | | |
| Ex. 6 | A | A | A | A | B |
| Ex. 7 | A | A | A | A | B |
| Ex. 8 | A | A | A | A | A |
| Ex. 9 | A | A | A | A | B |
| Ex. 10 | A | A | A | B | B |
| Ex. 11 | A | A | A | B | B |
| Comp. Ex. 3 | C | B | A | C | B |
| Camp. Ex. 4 | C | B | B | C | B |

### Examples 12 to 16 and Comparative Example 5:

Ink sets according to Examples 12 to 16 were respectively prepared by combining two pigments inks as black inks with each and using yellow, magenta and cyan inks as color inks. Each ink was prepared in the following manner. After its corresponding components described below were stirred into a solution, the solution was filtered under reduced pressure through a microfilter (product of Fuji Photo Film Co., Ltd.) having a pore size of 3 µm when the ink was a black ink, or through a microfilter (product of Fuji Photo Film Co., Ltd.) having a pore size of 0.2 µm when the ink was a color ink, thereby preparing inks.

### Example 12:

| Black Ink A₁: | |
|---|---|
| Carbon Black 1 (cationic) | 5 parts |
| Ethylene glycol | 9 parts |
| Diethylene glycol | 5 parts |
| Water | 81 parts. |

| Black Ink B₁: | |
|---|---|
| Pigment Dispersion 4 (anionic) | 30 parts |
| Triethylene glycol | 7 parts |
| Diethylene glycol | 5 parts |
| Water | 58 parts. |

| Yellow ink: | |
|---|---|
| C.I. Direct Yellow 86 | 2 parts |
| Glycerol | 5 parts |
| Thiodiglycol | 5 parts |
| Diethylene glycol | 5 parts |
| Acetylenol EH | 0.7 parts |
| Water | 82.3 parts. |

| Magenta ink: | |
|---|---|
| C.I. Acid Red 54 | 3 parts |
| Glycerol | 5 parts |
| Thiodiglycol | 5 parts |
| Diethylene glycol | 5 parts |
| Acetylenol EH | 0.7 parts |
| Water | 81.3 parts. |

| Cyan ink: | |
|---|---|
| C.I. Direct Blue 199 | 3 parts |
| Glycerol | 5 parts |
| Thiodiglycol | 5 parts |
| Diethylene glycol | 5 parts |
| Acetylenol EH | 0.7 parts |
| Water | 81.3 parts. |

### Example 13:

| Black Ink A₁: | |
|---|---|
| Carbon Black 2 (cationic) | 5 parts |
| Ethylene glycol | 9 parts |
| Diethylene glycol | 5 parts |
| Water | 81 parts. |

| Black Ink B₁: | |
|---|---|
| Pigment Dispersion 5 (anionic) | 30 parts |
| Triethylene glycol | 7 parts |
| Diethylene glycol | 5 parts |
| Water | 58 parts. |

| Yellow ink: | |
|---|---|
| C.I. Direct Yellow 132 | 3 parts |
| Glycerol | 5 parts |
| Thiodiglycol | 5 parts |
| Diethylene glycol | 9 parts |
| Isopropyl alcohol | 7 parts |
| Water | 71 parts. |

| Magenta ink: | |
|---|---|
| C.I. Acid Red 94 | 3 parts |
| Glycerol | 5 parts |
| Thiodiglycol | 5 parts |
| Diethylene glycol | 9 parts |
| Acetylenol EH | 7 parts |
| Water | 71 parts. |

| Cyan ink: | |
|---|---|
| C.I. Acid Blue 9 | 3 parts |
| Glycerol | 5 parts |
| Thiodiglycol | 5 parts |
| Diethylene glycol | 9 parts |
| Isopropyl alcohol | 7 parts |
| Water | 71 parts. |

### Example 14:

| Black Ink A₁: | |
|---|---|
| Pigment Dispersion 3 (cationic) | 20 parts |
| Polyethylene glycol | 9 parts |
| Diethylene glycol | 5 parts |
| Water | 66 parts. |

| Black Ink B₁: | |
|---|---|
| Pigment Dispersion 1 (anionic) | 30 parts |
| Triethylene glycol | 7 parts |
| Diethylene glycol | 5 parts |
| Water | 58 parts. |

| Yellow ink: | |
|---|---|
| C.I. Direct Yellow 142 | 2 parts |
| Glycerol | 5 parts |
| Thiodiglycol | 5 parts |
| Diethylene glycol | 5 parts |
| Polyoxyethylene lauryl ether | 2 parts |
| Water | 81 parts. |

| Magenta ink: | |
|---|---|
| C.I. Acid Red 35 | 3 parts |
| Glycerol | 5 parts |
| Thiodiglycol | 5 parts |
| Diethylene glycol | 5 parts |
| Polyoxyethylene lauryl ether | 2 parts |
| Water | 80 parts. |

| Cyan ink: | |
|---|---|
| C.I. Direct Blue 86 | 3 parts |
| Glycerol | 5 parts |
| Thiodiglycol | 5 parts |
| Diethylene glycol | 5 parts |
| Polyoxyethylene lauryl ether | 2 parts |
| Water | 80 parts. |

### Example 15:

| Black Ink A₁: | |
|---|---|
| Carbon Black 1 (cationic) | 5 parts |
| 1,5-Pentanediol | 9 parts |
| Diethylene glycol | 5 parts |
| Water | 81 parts. |

| Black Ink B₁: | |
|---|---|
| Pigment Dispersion 6 (anionic) | 30 parts |
| Triethylene glycol | 7 parts |
| Diethylene glycol | 5 parts |
| Acetylenol EH | 0.7 parts |
| Water | 57.3 parts. |

| Yellow ink: | |
|---|---|
| C.I. Direct Yellow 142 | 2 parts |
| Glycerol | 5 parts |
| Thiodiglycol | 5 parts |
| Diethylene glycol | 5 parts |
| Triethylene glycol monobutyl ether | 5 parts |
| Water | 78 parts. |

| Magenta ink: | |
|---|---|
| C.I. Acid Red 35 | 3 parts |
| Glycerol | 5 parts |
| Thiodiglycol | 5 parts |
| Diethylene glycol | 5 parts |
| Triethylene glycol monobutyl ether | 5 parts |
| Water | 77 parts. |

| Cyan ink: | |
|---|---|
| C.I. Direct Blue 86 | 3 parts |
| Glycerol | 5 parts |
| Thiodiglycol | 5 parts |
| Diethylene glycol | 5 parts |
| Triethylene glycol monobutyl ether | 5 parts |
| Water | 77 parts. |

### Example 16:

| Black Ink A₁: | |
|---|---|
| ASTRAZON BLACK FDL (cationic, product of DYSTAR Co.) | 5 parts |
| Diethylene glycol | 9 parts |
| Ethylene glycol | 5 parts |
| Ethanol | 3 parts |
| Water | 78 parts. |

| Black Ink B₁: | |
|---|---|
| C.I. Direct Black 195 (anionic) | 2.5 parts |
| Glycerol | 7 parts |
| Ethylene glycol | 5 parts |
| Sodium hydroxide | 0.5 parts |
| Water | 85 parts. |

| Yellow ink: | |
|---|---|
| C.I. Direct Yellow 86 | 2 parts |
| Glycerol | 5 parts |
| Thiodiglycol | 5 parts |
| Diethylene glycol | 5 parts |
| Acetylenol EH | 0.7 parts |
| Water | 82.3 parts. |

| Magenta ink: | |
|---|---|
| C.I. Acid Red 54 | 3 parts |
| Glycerol | 5 parts |
| Thiodiglycol | 5 parts |
| Diethylene glycol | 5 parts |
| Acetylenol EH | 0.7 parts |
| Water | 81.3 parts. |

| Cyan ink: | |
|---|---|
| C.I. Direct Blue 199 | 3 parts |
| Glycerol | 5 parts |
| Thiodiglycol | 5 parts |
| Diethylene glycol | 9 parts |
| Acetylenol EH | 0.7 parts |
| Water | 81.3 parts. |

The surface tensions of the inks in each example are shown in Table 3.

### Comparative Example 5:

Only Black Ink B₁ of the black inks prepared in Example 14 was used to conduct recording.

The respective inks of the above-described Examples and Comparative Example were used to conduct recording on commercially available paper for copying (Canon PB paper and Xerox 4024 paper) and bond paper (Plover Bond).

As an ink-jet recording apparatus, was used a recording apparatus similar to that shown in Fig. 4. Images were formed using 5 recording heads as illustrated in Fig. 9. Incidentally, the recording heads used herein were the same recording heads as that used in BJC820 (trade name, ink-jet printer manufactured by Canon Inc.). Drive conditions for the recording heads, namely, energizing conditions for a heater in each head were as follows:
Applied voltage: 28 V
Pulse width: 3.2 µsec
Drive frequency: 5 kHz.

In the present invention, two black inks, i.e., Black Ink A₁ and Black Ink B₁ are used as black inks. Therefore, Black Ink A₁ was used in one recording head, and Black Ink B₁ in another recording head to conduct the recording. Further, the yellow, magenta and cyan inks were separately used in other three recording heads.

In Comparative Example, one and the same black ink was used in two recording heads for black inks to conduct the recording.

In each example, the record image of a black color was formed by using the two recording heads to make a record of 50 % duty by one recording head and make the remaining record of 50 % duty by another recording head so as to give 100 % duty. Record dots were formed by such a method as illustrated in Fig. 8. The dot-forming method is an example, and the present invention is not limited to this method.

Incidentally, a black ink having a higher surface tension was charged into a leading recording head in order that the black ink may impact first on a recording medium. Besides, with respect to the relationship between the black inks and the color inks, the recording was conducted in such a manner that the black inks impact first on the recording medium.

The record images obtained in Examples 12 to 16 and Comparative Example 5 were evaluated as to quality of black characters, and bleeding and white haze between black ink and color ink. The results thereof are shown in Table 4.

The evaluation of the record images was conducted in accordance with the following respective methods.

### [Quality of black characters]

English characters and numerals and solid prints were recorded on the above-described plain paper. Thereafter, the record samples were observed to evaluate them as to density, and feathering and sharpness of characters in accordance with the following standard:
A: High in density, free of any feathering and sharp in characters;
B: Density was fairly high, but feathering slightly occurred;
C: Density was low, and feathering considerably occurred.

### [Bleeding]

Solid prints of black, yellow, magenta and cyan colors were recorded in contiguity with one another on the above-described plain paper to observe the degree of bleeding at boundaries between the black ink and the color inks. Evaluation was made in accordance with the following standard:
A: Neither bleeding nor uneven color mixing occurred;
B: Bleeding and uneven color mixing partially occurred, but no problem arose from the viewpoint of practical use;
C: Bleeding and uneven color mixing occurred, and a problem arose from the viewpoint of practical use.

### [White haze]

The same pattern as in the evaluation as to bleeding was recorded to observe whether white uneven parts occurred or not in a black image region adjoining to a color image region. Evaluation was made in accordance with the following standard:
A: No white uneven part occurred;
C: White uneven parts occurred.

**Table 3**

| | Surface tension (dyn/cm) | | | | |
|---|---|---|---|---|---|
| | Black ink A₁ | Black ink B₁ | Yellow ink | Magenta ink | Cyan ink |
| Ex. 12 | 49 | 48 | 34 | 34 | 34 |
| Ex. 13 | 50 | 48 | 43 | 43 | 43 |
| Ex. 14 | 45 | 44 | 30 | 30 | 30 |
| Ex. 15 | 45 | 34 | 33 | 33 | 33 |
| Ex. 16 | 45 | 45 | 34 | 34 | 34 |

**Table 4**

| | Quality of black characters | Bleeding | White haze |
|---|---|---|---|
| Ex. 12 | A | A | A |
| Ex. 13 | A | A | A |
| Ex. 14 | A | A | A |
| Ex. 15 | A | A | A |
| Ex. 16 | A | A | A |
| Comp. Ex. 5 | B | C | C |

### Examples 17 to 20 and Comparative Example 6:

Ink sets according to Examples 17 to 20 were respectively prepared by combining two inks of a pigment ink and a dye ink as black inks with each and using yellow, magenta and cyan inks as color inks. Each ink was prepared in the following manner. After its corresponding components described below were stirred into a solution, the solution was filtered under reduced pressure through a microfilter (product of Fuji Photo Film Co., Ltd.) having a pore size of 3 µm when the ink was a black pigment ink, or through a microfilter (product of Fuji Photo Film Co., Ltd.) having a pore size of 0.2 µm when the ink was a black dye ink or a color ink, thereby preparing inks.

### Example 17:

| Black Ink A₂: | |
|---|---|
| Carbon Black 1 (cationic) | 5 parts |
| Ethylene glycol | 9 parts |
| Diethylene glycol | 5 parts |
| Water | 81 parts. |

| Black Ink B₂: | |
|---|---|
| C.I. Direct Black 195 (anionic) | 2.5 parts |
| Triethylene glycol | 7 parts |
| Diethylene glycol | 5 parts |
| Sodium hydroxide | 0.2 parts |
| Isopropyl alcohol | 4 parts |
| Water | 81.3 parts. |

| Yellow ink: | |
|---|---|
| C.I. Direct Yellow 86 | 2 parts |
| Glycerol | 5 parts |
| Thiodiglycol | 5 parts |
| Diethylene glycol | 5 parts |
| Acetylenol EH | 0.7 parts |
| Water | 82.3 parts. |

| Magenta ink: | |
|---|---|
| C.I. Acid Red 54 | 3 parts |
| Glycerol | 5 parts |
| Thiodiglycol | 5 parts |
| Diethylene glycol | 5 parts |
| Acetylenol EH | 0.7 parts |
| Water | 81.3 parts. |

| Cyan ink: | |
|---|---|
| C.I. Direct Blue 199 | 3 parts |
| Glycerol | 5 parts |
| Thiodiglycol | 5 parts |
| Diethylene glycol | 5 parts |
| Acetylenol EH | 0.7 parts |
| Water | 81.3 parts. |

### Example 18:

| Black Ink A₂: | |
|---|---|
| Carbon Black 2 (cationic) | 5 parts |
| Ethylene glycol | 9 parts |
| Diethylene glycol | 5 parts |
| Water | 81 parts. |

| Black Ink B₂: | |
|---|---|
| C.I. Direct Black 154 (anionic) | 3 parts |
| Triethylene glycol | 7 parts |
| Diethylene glycol | 5 parts |
| Sodium polyacrylate | 0.7 parts |
| Water | 84.3 parts. |

| Yellow ink: | |
|---|---|
| C.I. Direct Yellow 132 | 3 parts |
| Glycerol | 5 parts |
| Thiodiglycol | 5 parts |
| Diethylene glycol | 9 parts |
| Isopropyl alcohol | 7 parts |
| Water | 71 parts. |

| Magenta ink: | |
|---|---|
| C.I. Acid Red 94 | 3 parts |
| Glycerol | 5 parts |
| Thiodiglycol | 5 parts |
| Diethylene glycol | 9 parts |
| Acetylenol EH | 7 parts |
| Water | 71 parts. |

| Cyan ink: | |
|---|---|
| C.I. Acid Blue 9 | 3 parts |
| Glycerol | 5 parts |
| Thiodiglycol | 5 parts |
| Diethylene glycol | 9 parts |
| Isopropyl alcohol | 7 parts |
| Water | 71 parts. |

### Example 19:

| Black Ink A₂: | |
|---|---|
| Pigment Dispersion 3 (cationic) | 20 parts |
| Polyethylene glycol | 9 parts |
| Diethylene glycol | 5 parts |
| Water | 66 parts. |

| Black Ink B₂: | |
|---|---|
| C.I. Direct Black 195 (anionic) | 2.5 parts |
| Triethylene glycol | 7 parts |
| Diethylene glycol | 5 parts |
| Acetylenol EH | 0.5 parts |
| Water | 85 parts. |

| Yellow ink: | |
|---|---|
| C.I. Direct Yellow 142 | 2 parts |
| Glycerol | 5 parts |
| Thiodiglycol | 5 parts |
| Diethylene glycol | 5 parts |
| Polyoxyethylene lauryl ether | 2 parts |
| Water | 81 parts. |

| Magenta ink: | |
|---|---|
| C.I. Acid Red 35 | 3 parts |
| Glycerol | 5 parts |
| Thiodiglycol | 5 parts |
| Diethylene glycol | 5 parts |
| Polyoxyethylene lauryl ether | 2 parts |
| Water | 80 parts. |

| Cyan ink: | |
|---|---|
| C.I. Direct Blue 86 | 3 parts |
| Glycerol | 5 parts |
| Thiodiglycol | 5 parts |
| Diethylene glycol | 5 parts |
| Polyoxyethylene lauryl ether | 2 parts |
| Water | 80 parts. |

### Example 20:

| Black Ink A₂: | |
|---|---|
| Kayacel Black CN (cationic) | 4 parts |
| 1,5-Pentanediol | 9 parts |
| Diethylene glycol | 5 parts |
| Polyethyleneimine | 2 parts |
| Water | 80 parts. |

| Black Ink B₂: | |
|---|---|
| Pigment Dispersion 4 (anionic) | 30 parts |
| Triethylene glycol | 7 parts |
| Diethylene glycol | 5 parts |
| Acetylenol EH | 0.7 parts |
| Water | 57.3 parts. |

| Yellow ink: | |
|---|---|
| C.I. Direct Yellow 142 | 2 parts |
| Glycerol | 5 parts |
| Thiodiglycol | 5 parts |
| Diethylene glycol | 5 parts |
| Triethylene glycol monobutyl ether | 5 parts |
| Water | 78 parts. |

| Magenta ink: | |
|---|---|
| C.I. Acid Red 35 | 3 parts |
| Glycerol | 5 parts |
| Thiodiglycol | 5 parts |
| Diethylene glycol | 5 parts |
| Triethylene glycol monobutyl ether | 5 parts |
| Water | 77 parts. |

| Cyan ink: | |
|---|---|
| C.I. Direct Blue 86 | 3 parts |
| Glycerol | 5 parts |
| Thiodiglycol | 5 parts |
| Diethylene glycol | 5 parts |
| Triethylene glycol monobutyl ether | 5 parts |
| Water | 77 parts. |

The surface tensions of the inks in each example are shown in Table 5.

### Comparative Example 6:

Only Black Ink B₂ of the black inks prepared in Example 17 was used to conduct recording.

The respective inks of the above-described Examples and Comparative Example were used to conduct recording on commercially available paper for copying (Canon PB paper and Xerox 4024 paper) and bond paper (Plover Bond).

As an ink-jet recording apparatus, was used a recording apparatus similar to that shown in Fig. 4. Images were formed using 5 recording heads as illustrated in Fig. 9. Incidentally, the recording heads used herein were the same recording heads as that used in BJC820 (trade name, ink-jet printer manufactured by Canon Inc.). Drive conditions for the recording heads, namely, energizing conditions for a heater in each head were as follows:
Applied voltage: 28 V
Pulse width: 3.2 µsec
Drive frequency: 5 kHz.

In the present invention, two black inks, i.e., Black Ink A₂ and Black Ink B₂ are used as black inks. Therefore, Black Ink A₂ was used in one recording head, and Black Ink B₂ in another recording head to conduct the recording. Further, the yellow, magenta and cyan inks were separately used in other three recording heads.

In Comparative Example, one and the same black ink was used in two recording heads for black inks to conduct the recording.

In each example, the record image of a black color was formed by using the two recording heads to make a record of 50 % duty by one recording head and make the remaining record of 50 % duty by the other recording head so as to give 100 % duty. Record dots were formed by such a method as illustrated in Fig. 8. The dot-forming method is an example, and the present invention is not limited to this method.

Incidentally, a black ink having a higher surface tension was charged into a leading recording head in order that the black ink may impact first on a recording medium. Besides, with respect to the relationship between the black inks and the color inks, the recording was conducted in such a manner that the black inks impact first on the recording medium.

The record images obtained in Examples 17 to 20 and Comparative Example 6 were evaluated as to quality of black characters, and bleeding and white haze between black ink and color ink. The results thereof are shown in Table 6.

Incidentally, the evaluation of the record images was conducted in the same manner as in Example 12.

**Table 5**

| | Surface tension (dyn/cm) | | | | |
|---|---|---|---|---|---|
| | Black ink A₂ | Black ink B₂ | Yellow ink | Magenta ink | Cyan ink |
| Ex. 17 | 49 | 48 | 34 | 34 | 34 |
| Ex. 18 | 50 | 48 | 43 | 43 | 43 |
| Ex. 19 | 45 | 34 | 30 | 30 | 30 |
| Ex. 20 | 47 | 43 | 33 | 33 | 33 |

**Table 6**

| | Quality of black characters | Bleeding | White haze |
|---|---|---|---|
| Ex. 17 | A | A | A |
| Ex. 18 | A | A | A |
| Ex. 19 | A | A | A |
| Ex. 20 | A | A | A |
| Comp. Ex. 6 | B | C | C |

As described above, the ink set according to the present invention, comprising two black inks different in polarity each other, wherein one of said two black inks is a pigment ink, and the other is also a pigment ink, can attain high optical density and provide images having good fixing ability, irrespective of the kind of plain paper.

In addition, the ink-jet recording method and apparatus according to the present invention, wherein such an ink set is used, can attain high optical density and permits recording of images good in fixing ability, irrespective of the kind of plain paper.

Further, the ink set according to the present invention, comprising two black inks different in polarity each other, wherein one of said two black inks is a pigment ink, and the other is a dye ink, can attain high optical density and provide images good in fastness properties such as water fastness and light fastness and fixing ability, irrespective of the kind of plain paper.

In addition, the ink-jet recording method and apparatus according to the present invention, wherein such an ink set is used, can attain high optical density and permits recording of images good in fastness properties such as water fastness and light fastness and fixing ability, irrespective of the kind of plain paper.

Further, the ink set according to the present invention, comprising two black inks different in polarity each other, and color inks can attain high quality of black characters, prevent bleeding between black ink and color ink and white haze occurred in a black image region at a boundary area between black ink and color ink, irrespective of the kind of plain paper, and hence permits the provision of clear color images.

In addition, the ink-jet recording method and apparatus according to the present invention, wherein such an ink set is used, can attain high quality of black characters, prevent bleeding between black ink and color ink and white haze occurred in a black image region at a boundary area between black ink and color ink, irrespective of the kind of plain paper, and hence permits recording of clear color images.

## Claims

1. An ink set comprising two black inks, wherein one black ink is cationic and the other black ink is anionic, and wherein either both inks are pigment inks or one ink is a pigment ink and the other ink is a dye ink.

2. The ink set according to Claim 1, wherein the cationic ink is a pigment ink in which a pigment is dispersed with a cationic polymer or surfactant, or a self-dispersing type pigment ink in which a hydrophilic group is bonded to the surface of a pigment through an atomic group having a cationic group.

3. The ink set according to Claim 1 or 2, wherein the anionic ink is a pigment ink in which a pigment is dispersed with an anionic polymer or surfactant, or a self-dispersing type pigment ink in which a hydrophilic group is bonded to the surface of a pigment through an atomic group having an anionic group.

4. The ink set according to Claim 1, wherein one black ink of said two black inks the coloring materials for which are both pigments is a self-dispersing type cationic pigment ink in which a hydrophilic group having a cationic group is directly bonded to carbon black, and the other black ink is a self-dispersing type anionic pigment ink in which a hydrophilic group having a anionic group is directly bonded to carbon black.

5. The ink set according to Claim 4, wherein the hydrophilic group in the cationic pigment ink is composed of at least one aromatic or heterocyclic group and at least one cationic group.

6. The ink set according to Claim 4 or 5, wherein the cationic group is a quaternary ammonium group.

7. The ink set according to Claim 4, wherein the anionic group is a sulfonic or carboxyl group.

8. The ink set according to Claim 1, wherein the cationic ink is a cationic dye ink.

9. The ink set according to Claim 1, wherein the anionic ink is an anionic dye ink.

10. The ink set according to Claim 1, wherein one black ink of said two black inks the coloring materials for which are a pigment for one ink and a dye for the other ink is a self-dispersing type cationic pigment ink in which a hydrophilic group having a cationic group is directly bonded to carbon black, and the other black ink is an anionic dye ink.

11. The ink set according to Claim 10, wherein the hydrophilic group in the cationic pigment ink is composed of at least one aromatic or heterocyclic group and at least one cationic group.

12. The ink set according to Claim 11, wherein the cationic group is a quaternary ammonium group.

13. The ink set according to Claim 10, wherein the cationic pigment ink comprises a cationic polymer.

14. The ink set according to Claim 10, wherein the anionic dye ink comprises an anionic polymer.

15. The ink set according to Claim 1, wherein one black ink of said two black inks the coloring materials for which are a pigment for one ink and a dye for the other ink is a cationic dye ink, and the other black ink is a self-dispersing type anionic pigment ink in which a hydrophilic group having an anionic group is directly bonded to carbon black.

16. The ink set according to Claim 15, wherein the anionic group is a sulfonic or carboxylic group.

17. The ink set according to Claim 15, wherein the anionic pigment ink comprises an anionic polymer.

18. The ink set according to Claim 15, wherein the cationic dye ink comprises a cationic polymer.

19. The ink set according to any one of the preceding claims, wherein one black ink of the two black inks has a surface tension of at least 40 dyn/cm, and the other black ink has a surface tension lower than 40 dyn/cm.

20. The ink set according to any one of the preceding claims, wherein the concentrations of the coloring materials used for the two black inks differ from each other.

21. An ink set according to any one of the preceding claims, further comprising additional color inks.

22. The ink set according to Claim 21, wherein coloring materials used for the color inks are dyes.

23. The ink set according to Claims 21 or 22, wherein the color inks are at least yellow, magenta and cyan inks.

24. The ink set according to any one of claims 21 to 23, wherein the color inks have a surface tension lower than 40 dyn/cm.

25. An ink-jet recording method comprising ejecting ink droplets from orifices in response to recording signals to conduct recording on a recording medium, wherein an ink set according one of the preceding claims is used to conduct the recording.

26. The method according to claim 25, wherein the ink droplets are ejected by applying thermal energy to the inks.

27. A recording unit comprising an ink container portion with an ink held therein and a head from which the ink is ejected in the form of ink droplets, wherein the ink is one in the ink set according to any one of claims 1 to 24.

28. The unit according to Claim 27, wherein the head is a head of the type that thermal energy is applied to an ink to eject droplets of the ink.

29. The unit according to claim 27 or 28, wherein the ink container portion is formed of polyurethane, cellulose, polyvinyl acetate or polyolefin resin.

30. An ink cartridge comprising an ink container portion with an ink held therein, wherein the ink is one in the ink set according to any one of claims 1 to 24.

31. The cartridge according to claim 30, wherein the ink container portion is formed of a polyolefin at its surface with which the ink comes into contact.

32. An ink-jet recording apparatus comprising a recording unit according to any one of claims 27 to 29.

33. The apparatus according to claim 32, further comprising an ink feeder for feeding the ink contained in the ink cartridge to the recording head.

## Patentansprüche

1. Tintenset mit zwei schwarzen Tinten, wobei eine schwarze Tinte eine kationische und die andere schwarze Tinte eine anionische ist und wobei entweder beide Tinten Pigmenttinten sind oder eine Tinte eine Pigmenttinte und die andere Tinte eine Farbstofftinte ist.

2. Tintenset nach Anspruch 1, wobei die kationische Tinte eine Pigmenttinte ist, bei der ein Pigment mit einem kationischen Polymeren oder oberflächenaktiven Mittel dispergiert ist, oder einer Pigmenttinte vom selbst-dispergierenden Typ ist, bei der eine hydrophile Gruppe über eine Atomgruppe, die eine kationische Gruppe hat, an die Oberfläche eines Pigments gebunden ist.

3. Tintenset nach Anspruch 1 oder 2, wobei die anionische Tinte eine Pigmenttinte ist, in der ein Pigment mit einem anionischen Polymeren oder oberflächenaktiven Mittel dispergiert ist, oder eine Pigmenttinte vom selbst-dispergierenden Typ ist, bei der eine hydrophile Gruppe über eine Atomgruppe, die eine anionische Gruppe hat, an die Oberfläche eines Pigments gebunden ist.

4. Tintenset nach Anspruch 1, wobei die eine der beiden schwarzen Tinten, deren Färbematerialien je Pigmente sind, eine Pigmenttinte vom selbst-dispergierenden kationischen Typ ist, bei der eine hydrophile Gruppe, die eine kationische Gruppe hat, direkt an Karbonschwarz gebunden ist, und die andere schwarze Tinte eine Pigmenttinte vom selbst-dispergierenden anionischen Typ ist, bei der eine hydrophile Gruppe, die eine anionische Gruppe hat, direkt an Karbonschwarz gebunden ist.

5. Tintenset nach Anspruch 4, wobei die hydrophile Gruppe in der kationischen Pigmenttinte aus mindestens einer aromatischen oder heterozyklischen Gruppe und mindestens einer kationischen Gruppe aufgebaut ist.

6. Tintenset nach Anspruch 4 oder 5, wobei die kationische Gruppe eine quaternäre Ammoniumgruppe ist.

7. Tintenset nach Anspruch 4, wobei die anionische Gruppe eine Sulfon- oder Carboxylgruppe ist.

8. Tintenset nach Anspruch 1, wobei die kationische Tinte eine kationische Farbstofftinte ist.

9. Tintenset nach Anspruch 1, wobei die anionische Tinte eine anionische Farbstofftinte ist.

10. Tintenset nach Anspruch 1, wobei eine jener beiden schwarzen Tinten, deren Färbematerialien bei einer Tinte ein Pigment und bei der anderen Tinte ein Farbstoff sind, eine Pigmenttinte vom selbst-dispergierenden kationischen Typ ist, bei der eine hydrophile Gruppe, die eine kationische Gruppe hat, direkt an Karbonschwarz gebunden ist, und die andere schwarze Tinte eine anionische Farbstofftinte ist.

11. Tintenset nach Anspruch 10, wobei die hydrophile Gruppe in der kationischen Pigmenttinte aus mindestens einer aromatischen oder heterozyklischen Gruppe und mindestens einer kationischen Gruppe aufgebaut ist.

12. Tintenset nach Anspruch 11, wobei die kationische Gruppe eine quaternäre Ammoniumgruppe ist.

13. Tintenset nach Anspruch 10, wobei die kationische Pigmenttinte ein kationisches Polymeres aufweist.

14. Tintenset nach Anspruch 10, wobei die anionische Farbstofftinte ein anionisches Polymeres aufweist.

15. Tintenset nach Anspruch 1, wobei eine jener beiden schwarzen Tinten, deren Färbematerialien bei der einen Tinte ein Pigment und bei der anderen Tinte ein Farbstoff sind, eine kationische Farbstofftinte ist und die andere schwarze Tinte eine Pigmenttinte vom selbst-dispergierenden anionischen Typ ist, bei der eine hydrophile Gruppe, die eine anionische Gruppe hat, direkt an Karbonschwarz gebunden ist.

16. Tintenset nach Anspruch 15, wobei die anionische Gruppe eine Sulfon- oder Carboxylgruppe ist.

17. Tintenset nach Anspruch 15, wobei die anionische Pigmenttinte ein anionisches Polymeres aufweist.

18. Tintenset nach Anspruch 15, wobei die kationische Farbstofftinte ein kationisches Polymeres aufweist.

19. Tintenset nach einem der vorangehenden Ansprüche, wobei eine der beiden schwarzen Tinten eine Oberflächenspannung von mindestens 40 dyn/cm und die andere schwarze Tinte eine Oberflächenspannung von weniger als 40 dyn/cm hat.

20. Tintenset nach einem der vorangehenden Ansprüche, wobei die Konzentrationen der in den beiden schwarzen Tinten eingesetzten Färbematerialien voneinander verschieden sind.

21. Tintenset nach einem der vorangehenden Ansprüche, welcher zusätzlich farbige Tinten aufweist.

22. Tintenset nach Anspruch 21, wobei die für die farbigen Tinten verwendeten Färbematerialien Farbstoffe sind.

23. Tintenset nach Anspruch 21 oder 22, wobei die farbigen Tinten mindestens gelbe, magentafarbige und zyanfarbige Tinten sind.

24. Tintenset nach einem der Ansprüche 21 bis 23, wobei die farbigen Tinten eine Oberflächenspannung von kleiner als 40 dyn/cm haben.

25. Tintenstrahl-Aufzeichnungsverfahren, umfassend ein Austragen von Tintentröpfchen aus Öffnungen in Reaktion auf Aufzeichnungssignale zur Ausführung einer Aufzeichnung auf ein Aufzeichnungsmedium, wobei ein Tintenset nach einem der vorangehenden Ansprüche zur Ausführung der Aufzeichnung verwendet wird.

26. Verfahren nach Anspruch 25, wobei die Tintentröpfchen durch Zuführen von thermischer Energie zu den Tinten ausgetragen werden.

27. Aufzeichnungseinheit mit einem Tintenbehälterabschnitt mit darin befindlicher Tinte und einem Kopf, aus dem die Tinte in Form von Tintentröpfchen ausgetragen wird, wobei die Tinte eine Tinte des Tintensets nach einem der Ansprüche 1 bis 24 ist.

28. Einheit nach Anspruch 27, wobei der Kopf ein Kopf des Typs ist, bei dem thermische Energie auf eine Tinte einwirkt, um Tintentröpfchen auszutragen.

29. Einheit nach Anspruch 27 oder 28, wobei der Tintenbehälterabschnitt aus Polyurethan, Cellulose, Polyvinylacetat oder Polyvinylharz gebildet ist.

30. Tintenpatrone, umfassend einen Tintenbehälterabschnitt mit darin untergebrachter Tinte, bei der die Tinte eine Tinte des Tintensets nach einem der Ansprüche 1 bis 24 ist.

31. Patrone nach Anspruch 30, bei der der Tintenbehälterabschnitt an seiner Oberfläche, mit der die Tinte in Berührung kommt, aus Polyolefin ist.

32. Tintenstrahlaufzeichnungsgerät mit einer Aufzeichnungseinheit nach einem der Ansprüche 27 bis 29.

33. Gerät nach Anspruch 32, des weiteren umfassend einen Tintenzuführer zum Zuführen der in der Tintenpatrone enthaltenen Tinte zum Aufzeichnungskopf.

## Revendications

1. Assortiment d'encres, comprenant deux encres noires, dans lequel une encre noire est cationique et l'autre encre noire est anionique, et dans lequel les deux encres sont des encres à base de pigments ou bien une encre est une encre est à base de pigment et l'autre encre est une encre à base de colorant.

2. Assortiment d'encres suivant la revendication 1, dans lequel l'encre cationique est une encre à base de pigment dans laquelle un pigment est dispersé avec un polymère ou agent tensio-actif cationique, ou une encre à base de pigment du type à auto-dispersion dans laquelle un groupe hydrophile est lié à la surface d'un pigment par un groupe atomique ayant un groupe cationique.

3. Assortiment d'encres suivant la revendication 1 ou 2, dans lequel l'encre anionique est une encre à base de pigment dans laquelle un pigment est dispersé avec un polymère ou agent tensio-actif anionique, ou une encre à base de pigment du type à auto-dispersion dans laquelle un groupe hydrophile est lié à la surface d'un pigment par un groupe atomique ayant un groupe anionique.

4. Assortiment d'encres suivant la revendication 1, dans lequel une encre noire desdites deux encres noires, dont les matières colorantes sont toutes deux des pigments, est une encre à base de pigment cationique du type à auto-dispersion dans laquelle un groupe hydrophile ayant un groupe cationique est lié directement au noir de carbone, et l'autre encre noire est une encre à base de pigment anionique du type à auto-dispersion dans laquelle un groupe hydrophile ayant un groupe anionique est lié directement à du noir de carbone.

5. Assortiment d'encres suivant la revendication 4, dans lequel le groupe hydrophile dans l'encre à base de pigment cationique est constitué d'au moins un groupe aromatique ou hétérocyclique et d'au moins un groupe cationique.

6. Assortiment d'encres suivant la revendication 4 ou 5, dans lequel le groupe cationique est un groupe ammonium quaternaire.

7. Assortiment d'encres suivant la revendication 4, dans lequel le groupe anionique est un groupe sulfonique ou carboxyle.

8. Assortiment d'encres suivant la revendication 1, dans lequel l'encre cationique est une encre à base de colorant cationique.

9. Assortiment d'encres suivant la revendication 1, dans lequel l'encre anionique est une encre à base de colorant anionique.

10. Assortiment d'encres suivant la revendication 1, dans lequel une encre noire desdites deux encres noires, dont les matières colorantes consistent en un pigment pour une encre et un colorant pour l'autre encre, est une encre à base de pigment cationique du type à auto-dispersion dans laquelle un groupe hydrophile ayant un groupe cationique est lié directement à du noir de carbone, et l'autre encre noire est une encre à base de colorant anionique.

11. Assortiment d'encres suivant la revendication 10, dans lequel le groupe hydrophile dans l'encre à base de pigment cationique est constitué d'au moins un groupe aromatique ou hétérocyclique et d'au moins un groupe cationique.

12. Assortiment d'encres suivant la revendication 11, dans lequel le groupe cationique est un groupe ammonium quaternaire.

13. Assortiment d'encres suivant la revendication 10, dans lequel l'encre à base de pigment cationique comprend un polymère cationique.

14. Assortiment d'encres suivant la revendication 10, dans lequel l'encre à base de pigment anionique comprend un polymère anionique.

15. Assortiment d'encres suivant la revendication 1, dans lequel une encre noire desdites deux encres noires, dont les matières colorantes consistent en un pigment pour une encre et un colorant pour l'autre encre, est une encre à base de colorant cationique, et l'autre encre noire est une encre à base de pigment anionique du type à auto-dispersion dans laquelle un groupe hydrophile ayant un groupe anionique est lié directement à du noir de carbone.

16. Assortiment d'encres suivant la revendication 15, dans lequel le groupe anionique est un groupe sulfonique ou carboxylique.

17. Assortiment d'encres suivant la revendication 15, dans lequel l'encre à base de pigment anionique comprend un polymère anionique.

18. Assortiment d'encres suivant la revendication 15, dans lequel l'encre à base de colorant cationique comprend un polymère cationique.

19. Assortiment d'encres suivant l'une quelconque des revendications précédentes, dans lequel une encre noire des deux encres noires a une tension superficielle d'au moins 40 dyn/cm, et l'autre encre noire a une tension superficielle inférieure à 40 dyn/cm.

20. Assortiment d'encres suivant l'une quelconque des revendications précédentes, dans lequel les concentrations des matières colorantes utilisées par les deux encres noires diffèrent l'une de l'autre.

21. Assortiment d'encres suivant l'une quelconque des revendications précédentes, comprenant en outre des encres de couleurs supplémentaires.

22. Assortiment d'encres suivant la revendication 21, dans lequel les matières colorantes utilisées pour les encres de couleurs sont des colorants.

23. Assortiment d'encres suivant les revendications 21 ou 22, dans lequel les encres de couleurs sont au moins des encres jaune, magenta et cyan.

24. Assortiment d'encres suivant l'une quelconque des revendications 21 à 23, dans lequel les encres de couleurs ont une tension superficielle inférieure à 40 dyn/cm.

25. Procédé d'enregistrement par jet d'encre, comprenant l'éjection de gouttelettes d'encre par des orifices en réponse à des signaux d'enregistrement pour effectuer un enregistrement sur un support d'enregistrement, dans lequel un assortiment d'encres suivant l'une quelconque des revendications précédentes est utilisé pour effectuer l'enregistrement.

26. Procédé suivant la revendication 25, dans lequel les gouttelettes d'encre sont éjectées en appliquant de l'énergie thermique aux encres.

27. Unité d'enregistrement comprenant une partie servant de récipient d'encre renfermant une encre et une tête de laquelle l'encre est éjectée sous forme de gouttelettes d'encre, dans laquelle l'encre est une des encres de l'assortiment d'encres suivant l'une quelconque des revendications 1 à 24.

28. Unité suivant la revendication 27, dans laquelle la tête est une tête du type appliquant de l'énergie thermique à une encre pour éjecter des gouttelettes de l'encre.

29. Unité suivant la revendication 27 ou 28, dans laquelle la partie servant de récipient d'encre est formée d'un polyuréthanne, de cellulose, d'acétate de polyvinyle ou d'une résine polyoléfinique.

30. Cartouche d'encre comprenant une partie servant de récipient d'encre renfermant une encre, dans laquelle l'encre est une des encres de la série d'encres suivant l'une quelconque des revendications 1 à 24.

31. Cartouche suivant la revendication 30, dans laquelle la partie servant de récipient d'encre est formée d'une polyoléfine à sa surface avec laquelle l'encre vient en contact.

32. Appareil d'enregistrement par jet d'encre, comprenant une unité d'enregistrement suivant l'une quelconque des revendications 27 à 29.

33. Appareil suivant la revendication 32, comprenant en outre un distributeur d'encre pour distribuer l'encre présente dans la cartouche d'encre à la tête d'enregistrement.
